# EUROPÄISCHE PATENTSCHRIFT

(11) **EP 0 666 162 B1**
(45) Veröffentlichungstag und Bekanntmachung des Hinweises auf die Patenterteilung: **25.03.1998**
(21) Anmeldenummer: 95100915.8
(22) Anmeldetag: 24.01.1995
(51) Int. Cl.: B29C 49/32

(54) **Vorrichtung zum Herstellen von Hohlkörpern aus thermoplastischem Kunststoff im Extrusions-Blasverfahren**
Apparatus for making hollow articles from thermoplastic material by extrusion-blow moulding
Dispositif de fabrication de corps creux en matière thermoplastique par extrusion-soufflage

(30) Priorität: 07.02.1994 DE 4403698
(43) Veröffentlichungstag der Anmeldung: 09.08.1995
(73) Patentinhaber: Krupp Kautex Maschinenbau GmbH, 53229 Bonn (DE)
(72) Erfinder: Kiefer, Erich, D-53229 Bonn (DE); Friedrichs, Karsten, D-53604 Bad Honnef (DE); Baltes, Klaus, D-50126 Bergheim (DE)
(74) Vertreter: Koepsell, Helmut, Dipl.-Ing.

(56) Entgegenhaltungen:
- WO-A-92/13703
- WO-A-93/23232
- DE-A- 2 052 460
- US-A- 3 728 063
- US-A- 4 022 561

## Beschreibung

Die Erfindung betrifft eine Vorrichtung gemäß dem Oberbegriff des Anspruches 1.

Insbesondere bei der Herstellung größerer Hohlkörper, beispielsweise Fässer oder Kfz.-Tanks, ist es bekannt und auch üblich, einem Extrusionskopf wenigstens zwei Blasformen zuzuordnen, die wechselweise in die Aufnahmeposition z. B. unterhalb des Extrusionskopfes gebracht werden, um die aus letzterem extrudierten Vorformlinge aufzunehmen. Dabei ist es erforderlich, die Blasformen relativ zum Extrusionskopf bewegbar anzuordnen derart, daß nach Aufnahme eines Vorformlings durch eine Blasform letztere wegbewegt wird, um den Raum unterhalb des Extrusionskopfes für die andere Blasform zur Aufnahme des jeweils folgenden Vorformlings freizumachen.

Bei kontinuierlicher Extrusion des Vorformlings ist es im allgemeinen üblich, die Bewegung der Blasform zwischen der Aufnahmestation unterhalb des Extrusionskopfes und einer von der Aufnahmestation entfernten Station im wesentlichen parallel zur Trennfläche der Blasform durchzuführen. Bei symmetrischer Ausgestaltung der Blasformteile ist diese Trennfläche die vertikale Symmetrieebene der Blasform, jedenfalls eine Fläche, die nicht parallel, zumeist senkrecht zu den Richtungen der Öffnungs- und Schließbewegungen verläuft. Die Notwendigkeit, die Bewegungen der Blasform zwischen Aufnahmeposition und einer von dieser entfernten Position etwa parallel zu der vorgenannten Ebene durchzuführen, gibt die Möglichkeit, die beiden Formteile der Blasform in geöffnetem Zustand derselben bei der Bewegung in die Aufnahmeposition an dem in der Bildung begriffenen Vorformling, der bereits den größten Teil seiner erforderlichen Länge aufweisen kann, seitlich vorbeizuführen. Dabei ist auch eine Bewegung der Blasform entlang einem Bogenabschnitt möglich, solange der Radius dieses Bogens so groß ist, daß die vorgenannten Voraussetzungen erfüllt sind. Trotzdem sind bei kontinuierlicher Extrusion die Bewegungsmöglichkeiten zwischen in der Aufnahmestation befindlichem Vorformling und Blasform eingeschränkt, es sei denn, daß besondere, zusätzliche Maßnahmen getroffen werden, beispielsweise durch Einführen des Vorformlings in die in der Aufnahmestation befindliche Blasform mittels eines Greifers, der den Vorformling zunächst von dem in einem bestimmten Abstand von der Aufnahmestation befindlichen Extrusionskopf abgenommen hat. So könnte bei einer derartigen Arbeitsweise der Extrusionskopf in einem Abstand oberhalb der in der Aufnahmestation befindlichen Blasform angeordnet sein, der etwa der Soll-Länge des Vorformlings entspricht.

Die bei kontinuierlicher Extrusion des Vorformlings sich ergebenden Beschränkungen bezüglich der Durchführung der Bewegungen der Blasformen können sich nachteilig dahingehend auswirken, daß das Entnehmen der in den Blasformen durch Aufweiten hergestellten Hohlkörper nicht in einer für beide Blasformen gemeinsamen Position erfolgen kann, die von den Blasformen wechselweise eingenommen wird. Vielmehr ist es bei Vorrichtungen gemäß dem Stand der Technik üblich, daß die Blasformen beim Entfernen der Hohlkörper unterschiedliche Positionen einnehmen mit der Folge, daß die für das Entnehmen und für den Weitertransport der Hohlkörper in irgendwelche nachgeordneten Behandlungsstationen erforderlichen Einrichtungen doppelt vorhanden sein müssen. Dies führt zu einem nicht unerheblichen Aufwand, der mit der Größe der Hohlkörper zunimmt, da zwangsläufig die Transportwege, die Entnahmeeinrichtungen und die nachgeschalteten Transportmittel und sonstige Einrichtungen an die Größe der Hohlkörper angepaßt sein müssen.

Bei größeren Hohlkörpern, insbesondere Kfz-Tanks, ist es zudem häufig erforderlich, in die Blasform vor dem Schließen derselben zur Aufnahme des Vorformlings Teile einzulegen, die in der Blasform im Zuge des Aufweitens des Vorformlings zum Hohlkörper mit letzterem verbunden werden. Dabei kann es sich beispielsweise um im Inneren eines Tankes anzubringende Einbauteile handeln. Es können z. B. aber auch außen anzubringende Verstärkungsteile sein. Jedenfalls kommt der Verwendung derartiger Teile, die vor dem Schließen der Blasform in letztere eingelegt werden müssen, eine große praktische Bedeutung zu, wobei diese Teile mit großer Sorgfalt und im allgemeinen in sehr kurzer Zeit richtig in der Blasform plaziert werden müssen. Hier ist ebenfalls anzustreben, daß die wenigstens zwei Blasformen eine gemeinsame Station benutzen, in welcher sie mit den Einlegeteilen versehen werden, damit wesentliche Teile der dazu erforderlichen Einrichtungen von wenigstens zwei Blasform-Einheiten gemeinsam genutzt werden können.

Bei diskontinuierlicher Extrusion unter Verwendung eines Akkukopfes sind die vorstehend im Zusammenhang mit der kontinuierlichen Extrusion beschriebenen Nachteile und Einschränkungen weniger stark ausgeprägt, da bezüglich der Bewegungen der wenigstens zwei Blasform-Einheiten mehr Freiheiten vorhanden sind. Es ist auch möglich, für beide Blasform-Einheiten eine gemeinsame Station vorzusehen, in welcher die Hohlkörper aus der jeweils dort befindlichen Blasform-Einheit entfernt werden. Entsprechendes gilt für das Einlegen irgendwelcher Teile, die in der Blasform mit dem Hohlkörper verbunden werden sollen. Jedoch müssen auch bei diskontinuierlicher Extrusion gewisse Voraussetzungen erfüllt sein, wenn beispielsweise für beide Blasform-Einheiten eine einzige, gemeinsame Position vorgesehen ist, in welcher das Entnehmen der Hohlkörper erfolgt.

Demzufolge liegt der Erfindung die Aufgabe zugrunde, insbesondere große Extrusionsblasanlagen mit den Merkmalen des Oberbegriffes des Anspruches 1 so auszugestalten, daß in jedem Fall, also auch bei kontinuierlicher Extrusion, für wenigstens zwei Blasform-Einheiten eine einzige Station vorgesehen sein kann, in welcher die Hohlkörper aus den Blasform-Einheiten entnommen werden. Dies soll auch für den Fall gelten, daß das Zuführen von Einlegeteilen, die in der Blasform mit dem Hohlkörper zu verbinden sind, in einer einzigen, beiden Blasform-Einheiten gemeinsamen Position erfolgt, wobei gegebenenfalls sogar die beiden Positionen, also die Entnahmeposition und die Zuführposition, zusammenfallen können. Ferner wird angestrebt, daß alle Teile der Vorrichtung leicht zugänglich und somit leicht zu warten sind.

Diese Aufgabe wird mit den Mitteln des Anspruches 1 gelöst. Bei dieser Vorrichtung ist es ohne weiteres möglich, die Hohlkörper aus den Blasformen sämtlicher Blasform-Einheiten an einer Stelle herauszunehmen und von dieser Stelle mittels eines Transportbandes oder dergleichen wegzuführen. Entsprechendes gilt für die Zuführung von Einlegeteilen. D. h., daß gegenüber bekannten Vorrichtungen eine Konzentration der für das Entnehmen und Abtransportieren der aufgeweiteten Hohlkörper erforderlichen Mittel an einer Stelle möglich ist. Entsprechendes gilt auch für die Mittel zum Zuführen und/oder Einlegen irgendwelcher Zusatzteile.

Weitere Merkmale der Erfindung ergeben sich aus den Unteransprüchen.

Wenn nachfolgend von "Blasform" und "Blasform-Einheiten" die Rede ist, soll dies die Möglichkeit einschließen, daß jede Blasform zwei oder mehr Blasformnester enthält. Demzufolge ist auch der Begriff "Extrusionskopf" so zu verstehen, daß er mehrere Austrittsöffnungen enthalten kann, deren Anzahl der Anzahl der Blasformnester entspricht.

Der Begriff "Blasform-Einheit" umschließt z. B. auch die die Blasformteile tragende Konstruktion, die Antriebsmittel und Gleichlaufeinrichtungen für die Öffnungs- und Schließbewegungen der Blasformteile, Blasdorne oder andere Mittel zum Zuführen der Druckluft zum Aufweiten der Vorformlinge in der Blasform.

Der in der Anmeldung verwendete Begriff "kontinuierliche Extrusion" soll die Möglichkeit, den Extrusionsvorgang kurz zu unterbrechen, nicht ausschließen. Dieser Begriff ist so zu verstehen, daß die Blasform zu dem Zeitpunkt, zu welchem sie in die Aufnahmestation z. B. unterhalb des Extrusionskopfes bewegt wird, mit dem wenigstens einen Vorformling kollidieren würde, wenn nicht besondere Vorkehrungen, beispielsweise durch entsprechende Anordnung der Blasform relativ zum Vorformling, getroffen werden, beispielsweise im Sinne der einleitend erwähnten Anordnung der Blasformteile derart, daß sie bei der Bewegung in die Aufnahmestation an dem eventuell dort bereits befindlichen Vorformling vorbeigeführt werden.

Insbesondere bei Herstellung von Hohlkörpern mit mehrschichtiger Wandung wird zunehmend die kontinuierliche Extrusion des Vorformlings angewandt. Dabei wird der ebenfalls mehrschichtige Vorformling im Coextrusionsverfahren hergestellt, welches bei absatzweiser Extrusion besondere Vorkehrungen erfordert, um eine gleichmäßige und ungestörte Ausbildung der einzelnen Schichten des Vorformlings und dabei des daraus herzustellenden Artikels zu gewährleisten. Das Erfordernis der zusätzlichen Maßnahmen ist insbesondere darauf zurückzuführen, daß bei absatzweiser Extrusion Druckwechsel im Extrusionssystem, also im Extrusions-Speicherkopf und in den diesem zugeordneten Extrudern auftreten, die zu Unregelmäßigkeiten bei der Verteilung des die einzelnen Schichten bildenden Materials im Vorformling führen können. Demgegenüber kann bei kontinuierlicher Extrusion das gesamte System aus Extrudern und Extrusionskopf ohne Schwierigkeiten über längere Zeiträume in einem Zustand mit gleichbleibenden Betriebsbedingungen gehalten werden, da Druck und Strömungsgeschwindigkeiten im System sich, wenn überhaupt, nur langsam und innerhalb enger Grenzen ändern. Deshalb können z. B. bestimmte Schichten wesentlich gleichmäßiger und damit dünner ausgebildet sein. Außerdem ist ein Extrusionssystem für kontinuierliche Extrusion wesentlich billiger.

In der Zeichnung sind einige Ausführungsbeispiele der Erfindung im Schema dargestellt. Es zeigen:
- Fig. 1: eine Draufsicht einer mit zwei Blasform-Einheiten versehenen Vorrichtung, wobei das Extrusionssystem zur Erzielung einer besseren Übersicht weggelassen ist,
- Fig. 2: eine Vorderansicht dieser Vorrichtung mit dem Extrusionssystem,
- Fig. 3: eine Seitenansicht dieser Vorrichtung,
- Fig. 4 - 9: die im Verlauf der Arbeitszyklen von den beiden Blasform-Einheiten eingenommenen Positionen,
- Fig. 10-12: die im Verlauf der Arbeitszyklen von den Blasform-Einheiten eingenommenen Positionen einer drei Blasform-Einheiten aufweisenden Vorrichtung,
- Fig. 13+14: die Draufsicht einer weiteren Ausführungsform in zwei unterschiedlichen Positionen,
- Fig. 15: die Draufsicht einer weiteren Ausführungsform,
- Fig. 16+17: die Draufsicht einer weiteren Ausführungsform in zwei unterschiedlichen Positionen,
- Fig. 18+19: die Draufsicht einer weiteren Ausführungsform in zwei unterschiedlichen Positionen,
- Fig. 20: eine der Fig. 3 entsprechende Ansicht einer weiteren Ausführungsform,
- Fig. 21: eine der Fig. 20 entsprechende Darstellung, jedoch mit der Blasform-Einheit in einer anderen Position,
- Fig. 22+23: die Draufsicht zu Fig. 20 bzw. 21.

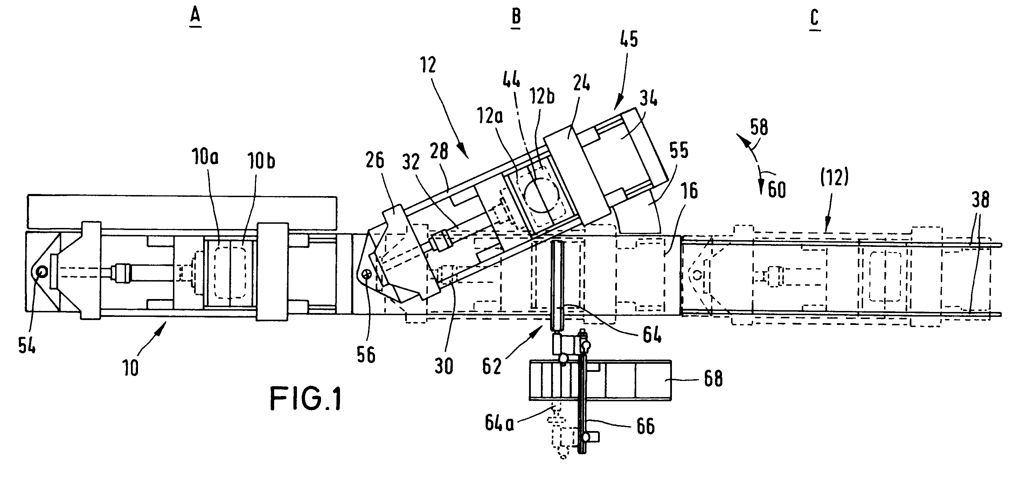

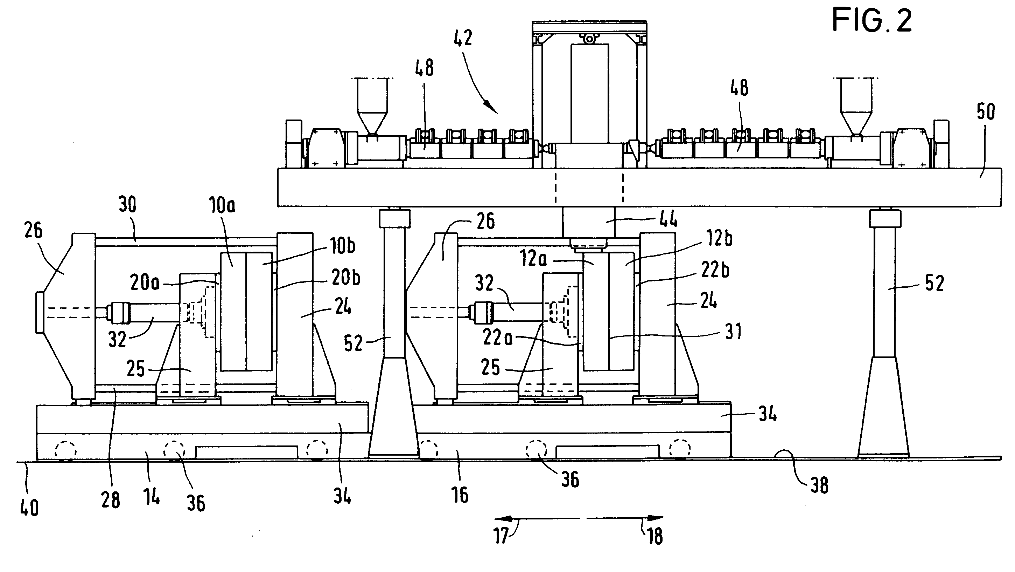

Der grundsätzliche Aufbau der Vorrichtung wird im folgenden zunächst im Zusammenhang mit den Fig. 1 - 3 beschrieben. Die darin dargestellte Ausführungsform weist zwei Blasform-Einheiten 10 und 12 auf, die in horizontaler Ebene hin- und herbewegbar angeordnet sind. Jede der beiden Blasform-Einheiten 10, 12 ist mit einem Wagen oder Schlitten 14 bzw. 16 versehen, welcher beispielsweise auf Schienen 38 in Richtung der Pfeile 17, 18 verfahrbar ist. Die beiden Blasform-Einheiten 10 und 12 sind jeweils als sogenannte Dreiplatten-Systeme ausgebildet. Jede der beiden Formhälften 10a, 10b bzw. 12a, 12b wird von einer Tragplatte 20a, 20b bzw. 22a, 22b getragen. Die Tragplatten 20a, 20b sind an etwa diagonal verlaufenden Stützen 24, 25 angebracht, von denen jede eine der beiden Platten des Dreiplatten-Systems darstellt. Die dritte Platte wird von einer im wesentlichen parallel zur Stütze 24 verlaufenden Stütze 26 gebildet, die über zwei Holme 28, 30 mit der die erste Platte bildenden Stütze 24 verbunden ist. Zwischen der die Formhälfte 10a tragenden Stütze 25 und der die dritte Platte darstellende Stütze 26 ist eine Kolben-Zylinder-Einheit 32 angeordnet derart, daß bei Beaufschlagung des Zylinders dieser Einheit 32, ausgehend von der in Fig. 2 der Zeichnung dargestellten Lage der Teile, die Stütze 25 mit der von ihr getragenen Blasformhälfte 10a nach links, also in Richtung des Pfeiles 17 und die Stütze 24 mit der von ihr getragenen Blasformhälfte 10b nach rechts, also in Richtung des Pfeiles 18 verschoben wird. Dabei erfolgt die Übertragung der Bewegung auf die Stütze 24 von der Stütze 26 über die beiden Holme 28, 30 und einer zwischen den Stützen 24 und 25 angeordneten, nicht dargestellten Gleichlaufeinrichtung. Im Zuge der vorbeschriebenen Bewegung der Teile wird die Blasform 10a,b geöffnet.

Eine Beaufschlagung der Kolben-Zylinder-Einheit 32 in entgegengesetzter Richtung führt zum Schließen der Blasform 10a,b. In Fig. 2 der Zeichnung sind beide Blasformen 10a, 10b bzw. 12a, 12b in der Schließlage dargestellt.

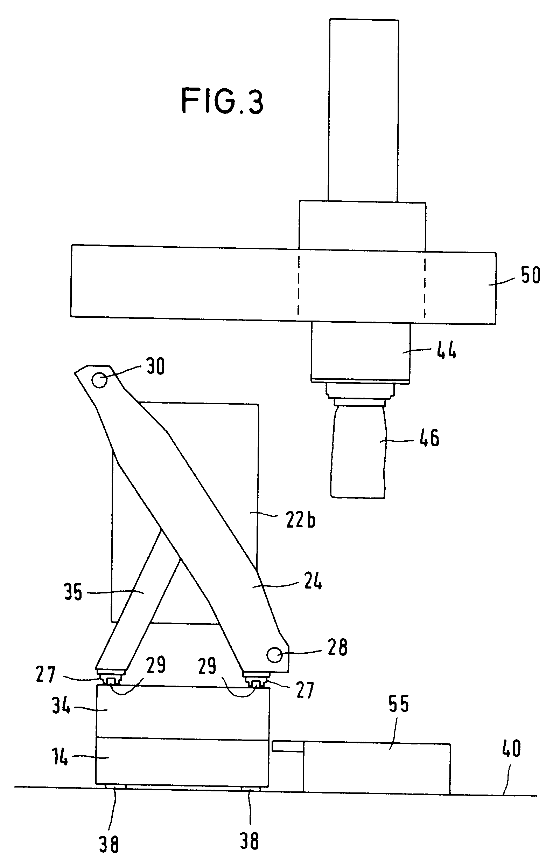

Um die vorbeschriebenen Schließ- und Öffnungsbewegungen durchführen zu können, sind die drei Stützen 24, 25 und 26 in Richtung der Pfeile 17, 18 verschiebbar auf einem Gestell 34 gelagert, welches seinerseits etwa in horizontaler Ebene schwenkbar auf dem Schlitten 14 angebracht ist. Insbesondere Fig. 3 der Zeichnung läßt erkennen, daß die Stützen 24, 25 und 26 mit jeweils einer seitlichen Strebe 35 versehen sein können. Die Stützen 24, 25, 26 und die jeweilige Strebe 35 sind an ihrem unteren Ende mit Rädern, Rollen oder dgl. 27 versehen, die auf am Gestell 34 oberseitig angebrachten Führungen 29 verfahrbar sind.

Die Wagen oder Schlitten 14, 16 sind ebenfalls mit Rädern 36 versehen, die auf den Schienen 38 geführt sind. Letztere sind auf dem Boden 40 verlegt.

Beide Blasform-Einheiten 10 und 12 sind in gleicher Weise ausgebildet, so daß einander entsprechende Teile auch mit gleichen Bezugszeichen versehen sind.

Bei dem in den Fig. 1 - 3 dargestellten Ausführungsbeispiel sind die beiden jeweils eine Blasform-Einheit 10 bzw. 12 tragenden Wagen 14 bzw. 16 als voneinander unabhängige Bauteile dargestellt mit dem Ergebnis, daß die beiden Schlitten 14 und 16 unabhängig voneinander in Richtung der Pfeile 17 und 18 bewegt werden können. Es ist aber auch möglich, die beiden Schlitten 14 und 16 zu einer Baueinheit zusammenzufassen oder miteinander zu koppeln.

Die Vorrichtung ist weiterhin mit einem kontinuierlich arbeitenden Extrusionssystem 42 versehen, welches einen Extrusionskopf 44 und zwei Extrudern 48 aufweist, die das in ihnen plastifizierte Material in den Extrusionskopf 44 fördern, an dessen unterem Ende es in Form eines im allgemeinen schlauchförmigen Vorformlings 46 austritt (Fig. 3). Aus Gründen der Übersichtlichkeit ist in den anderen Figuren der Vorformling nicht dargestellt.

Wenngleich in Fig. 2 der Zeichnung zwei Extruder dargestellt sind, ist es möglich, dem Extrusionskopf 44 auch nur einen oder mehr als zwei Extruder zuzuordnen. Mehr als zwei Extruder werden im allgemeinen dann vorhanden sein, wenn ein mehrschichtiger Vorformling koextrudiert wird. Die Wandung des aus dem Vorformling herzustellenden Hohlkörpers ist dann entsprechend ebenfalls mehrschichtig aufgebaut.

Extrusionskopf 44 und Extruder 48 mit den zugehörigen Antrieben und Zuführeinrichtungen sind auf einer Bühne 50 angeordnet, die ihrerseits in einer oberhalb der Blasform-Einheiten 10, 12 befindlichen Ebene von zwei Stützen 52 getragen wird.

Insbesondere Fig. 3 läßt erkennen, daß der Extrusionskopf 44 seitlich neben der durch die beiden Schienen 38 definierten Bewegungsbahn angeordnet ist, entlang welcher die beiden Blasform-Einheiten 10 bzw. 12 in Richtung der Pfeile 17, 18 hinund herbewegt werden.

Insbesondere Fig. 1 zeigt, daß die beiden Gestelle 34 jeweils an dem der als dritte Platte dienenden Stütze 26 zugekehrten Ende z. B. über einen Zapfen oder sonstwie in geeigneter Weise um einen Drehpunkt 54 bzw. 56 schwenkbar am jeweiligen Wagen 14 bzw. 16 gelagert sind mit dem Ergebnis, daß die jeweilige Blasform-Einheit 10 bzw. 12 mit dem sie tragenden Gestell um jeweils zugehörige Schwenkachse in Richtung des Pfeiles 58 in eine Position geschwenkt werden kann, die der Position der Blasform-Einheit 12 in Fig. 1 entspricht.

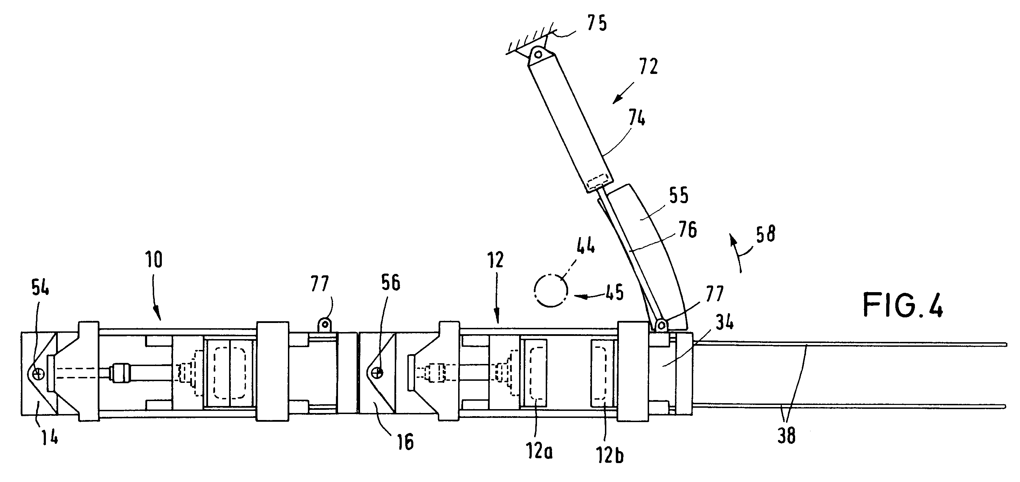

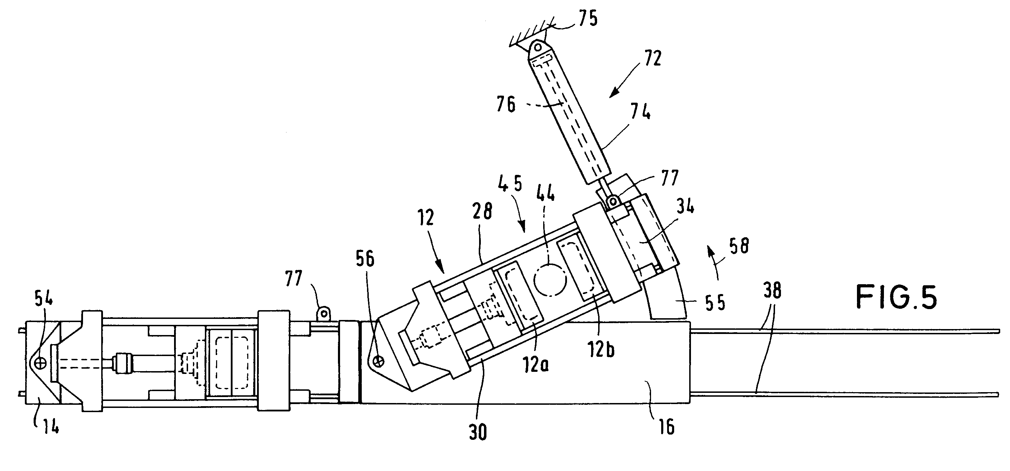

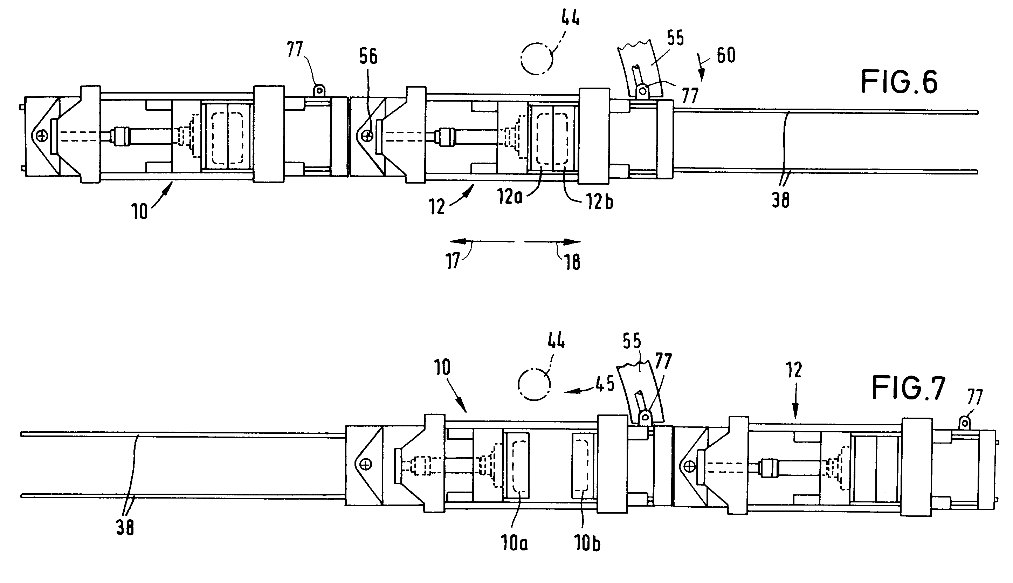

Eine mögliche Ausführung der für diese Schwenkbewegung erforderlichen Antriebsmittel ist in den Fig. 4 und 5 dargestellt. Es handelt sich dabei um eine Zylinder-Kolben-Einheit 72, deren Zylinder 74 an einem geeigneten Widerlager 75 schwenkbar angebracht ist, während das freie Ende der Kolbenstange 76 schwenkbar am Gestell 34 jener Blasform-Einheit 10 bzw. 12 lösbar anbringbar ist, die sich jeweils in der Entnahmestation befindet. Jedes Gestell 34 ist dazu mit einem Auge 77 versehen, an welchem das freie Ende der Kolbenstange 76 unter Verwendung eines Bolzens oder dgl. angebracht werden kann. In der in den Fig. 1 und 2 dargestellten Betriebslage der Blasform-Einheiten ist die Kolbenstange 76 mit der Blasform-Einheit 12 verbunden. Durch entsprechende Beaufschlagung des Zylinders 74 wird das Gestell 34 mit der Blasform-Einheit aus der Position gemäß Fig. 4 in die gemäß Fig. 1 und 5 und später wieder zurück in die gemäß Fig. 6 verschwenkt. Danach wird die Kolbenstange 76 vom Gestell 34 der Blasform-Einheit 12 gelöst, um nach erfolgter Verschiebung beider Blasform-Einheiten in die Position gemäß Fig. 7 mit dem Gestell der Blasform-Einheit 10 verbunden zu werden. D.h., daß für die Bewegung zwischen Entnahmeposition und Aufnahmeposition allen Blasform-Einheiten ein gemeinsames Antriebsmittel zugeordnet ist.

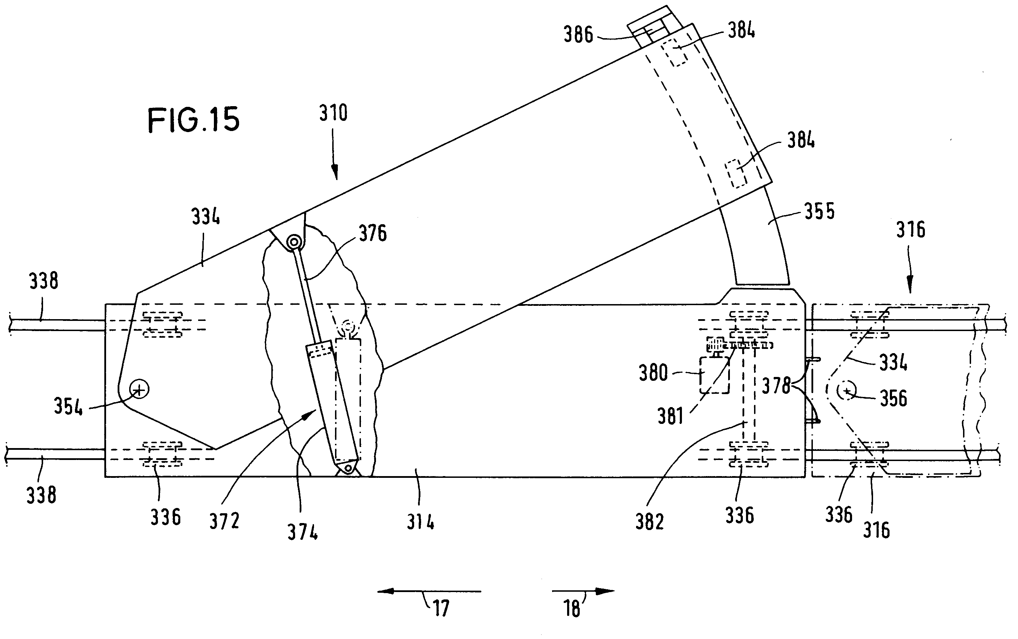

In der verschwenkten Lage befindet sich die jeweilige Blasform - in der Position der Teile gemäß Fig. 1 ist es die Blasform 12a,b - unterhalb des Extrusionskopfes 44, der in Fig. 1 mit einem Kreis angedeutet ist. Da die Blasform-Einheit mit dem sie tragenden Gestell in der verschwenkten Lage mit ihrem dem jeweiligen Schwenkpunkt 54 bzw. 56 abgekehrten Endbereich gegenüber dem jeweils zugehörigen Wagen 14 bzw. 16 seitlich auskragt, ist für die zusätzliche Abstützung der ausgeschwenkten Blasform-Einheit im Bereich neben der durch die beiden Schienen 38 definierten Bewegungsbahn ein zusätzliches Stützmittel 55 derart angeordnet, daß es während der Schwenkbewegung und in der ausgeschwenkten Lage den der jeweiligen Schwenkachse 54 bzw. 56 abgekehrten Endbereich der Blasform-Einheit zusätzlich abstützt. Zur Durchführung der Schwenkbewegungen können Wagen 14 bzw. 16 und/oder Gestelle 34 sowie ggf. Stützmittel 55 mit Führungsmitteln und Mitteln zum Reduzieren der Reibung versehen sein, wie dies z. B. in Fig. 15 angedeutet ist. Die dazu erforderlichen Ausgestaltungen und Maßnahmen sind jedem Fachmann geläufig, so daß sie hier nicht näher erläutert zu werden brauchen.

Im folgenden wird die Arbeitsweise der Vorrichtung insbesondere anhand der Fig. 4 - 9 beschrieben, wobei von der Position der beiden Blasform-Einheiten gemäß Fig. 4 ausgegangen wird, in welcher beide Blasform-Einheiten 10, 12 zueinander und zu der durch die Schienen 38 definierten Bewegungsbahn parallel verlaufen. Diese Position wird im folgenden als "linear" bezeichnet. Die Blasform-Einheit 12 befindet sich dabei seitlich neben dem Extrusionskopf 44 in der Entnahmeposition, wie dies Fig. 4 erkennen läßt. Die Blasform 12a, 12b ist geöffnet. D.h., daß die beiden Blasformteile 12a, 12b auseinanderbewegt sind und einen Abstand voneinander aufweisen. Das Öffnen der Blasform 12a,b erfolgte, um in der in Fig. 4 dargestellten Position der Blasform-Einheit 12 den im vorangegangenen Arbeitszyklus hergestellten Hohlkörper aus der Blasform herauszunehmen.

Ausgehend von der linearen Position gemäß Fig. 4 wird die Blasform-Einheit 12 mit geöffneter Blasform um die zugehörige Drehachse 56 in Richtung des Pfeiles 58 in die Aufnahmeposition 45 gemäß Fig. 5 verschwenkt, in welcher sich die geöffnete Blasform 12a,b unterhalb des Extrusionskopfes 44 befindet. Wenngleich der von der Blasform 12a,b aufzunehmende Vorformling bei kontinuierlicher Extrusion zum Zeitpunkt der Schwenkbewegung in die Aufnahmeposition gemäß Fig. 5 nahezu seine Soll-Länge, die für die Herstellung eines Hohlkörpers erforderlich ist, aufweisen wird, kann die Schwenkbewegung durchgeführt werden, ohne daß es zu einer unerwünschten Berührung zwischen Vorformling und irgendwelchen Teilen der Blasform-Einheit kommt. Der in Bewegungsrichtung 58 vorn liegende Holm 28 ist so tief angeordnet, daß er den am Extrusionskopf hängenden Vorformling unterhalb des freien Endes desselben passiert. Der in Bewegungsrichtung hinten und oben liegende Holm 30 bleibt außerhalb des Bereiches, innerhalb dessen sich der Vorformling befindet. Die beiden Blasformteile 12a,b sind so weit auseinandergefahren, daß sie sich in der Aufnahmeposition seitlich von dem am Extrusionskopf hängenden Vorformling befinden, wie dies die Fig. 5 deutlich zeigt.

Wenn der Vorformling mindestens seine Soll-Länge erreicht hat - dies wird im allgemeinen unmittelbar nach Beendigung der Schwenkbewegung in Richtung des Pfeiles 58 der Fall sein -, wird die Blasform durch Zusammenfahren der beiden Blasformteile 12a,b geschlossen. Dabei wird der Vorformling von der Blasform aufgenommen sowie oben und unten zumindest teilweise zusammengedrückt und verschlossen. Die Lage der Teile bei verschwenkter Position der Blasform-Einheit 12 und geschlossener Form, also unmittelbar nach dem Aufnehmen des Vorformlings, ist in Fig. 1 in ausgezogenen Linien dargestellt. Danach erfolgt das Aufweiten durch inneren Überdruck des Vorformlings, wobei allerdings auch schon in den noch am Extrusionskopf 44 hängenden Vorformling Luft oder ein anderes Gas eingeführt worden sein kann. Die mit dem Schließen der Form und dem dadurch bedingten Aufnehmen des Vorformlings durch die Blasform zusammenhängenden Maßnahmen und Vorgänge sind jedem Fachmann geläufig. Nach dem Schließen der Blasform 12a,b wird die geschlossene Blasform aus der Aufnahmeposition gemäß Fig. 5 in die der Fig. 6 in Richtung des Pfeiles 60 zurück in die Entnahmeposition geschwenkt, in welcher die Blasform-Einheit 12 wieder ihre lineare Position einnimmt.

Danach werden die beiden Blasform-Einheiten 10 und 12 in im wesentlichen horizontaler Ebene in Richtung des Pfeiles 18 (Fig. 2), also nach rechts in die Position gemäß Fig. 7 verschoben, in welcher sich die Blasform-Einheit 10 in der Entnahmestation, also neben dem Extrusionskopf 44 befindet. Die Position, welche die Blasform-Einheit 12 dabei einnimmt, ist in Fig. 1 der Zeichnung rechts gestrichelt dargestellt. Normalerweise wird der in der Blasform 12a,b befindliche Vorformling zum Zeitpunkt des Erreichens der Position gemäß Fig. 7 aufgeweitet sein, so daß hier bereits das Abkühlen des aus dem Vorformling entstandenen Hohlkörpers erfolgt, der an der Wandung des Nestes der Blasform 12a, 12b anliegt. Auch diese Vorgänge sind allgemein bekannt, so daß sie keiner weiteren Erläuterung bedürfen.

Nach Erreichen der Entnahmeposition gemäß Fig. 7 wird die Blasform 10a,b der Blasform-Einheit geöffnet, wie dies in Fig. 7 dargestellt ist, um den zuvor hergestellten Hohlkörper aus der Blasform 10a,b herauszunehmen. Dazu ist der Station B eine Entnahmevorrichtung 62 (Fig. 1) zugeordnet, die mit einem Greifer 64 versehen ist. Letzterer wird von einer Führung 66 getragen, entlang welcher der Greifer 64 etwa senkrecht zu den linearen Bewegungsrichtungen 17, 18 hin- und herbewegbar ist. In Fig. 1 ist der Greifer in geschlossenem Zustand dargestellt. D.h., daß die ihn bildenden beiden Teile aneinander anliegen. Im einzelnen kann die Entnahme des Hohlkörpers aus der in der Station B in linearer, also in der Entnahmeposition befindlichen Blasform 10a,b in der Weise erfolgen, daß, sobald die Teile die Position gemäß Fig. 7 erreicht haben, der Greifer 64 in die Position gemäß Fig. 1 bewegt wird, um das oben aus der Blasform herausragende Abfallteil des in der Blasform befindlichen Hohlkörpers zu erfassen. Dieses Abfallteil war beim Schließen der Blasform um den Vorformling in der Aufnahmestation von den beiden Hohlformteilen abgequetscht worden. Nachdem der Greifer 64 das Abfallteil erfaßt hat, kann die Blasform 10a,b geöffnet werden, so daß die Blasformteile 10a und 10b die in Fig. 7 dargestellte Lage einnehmen. Nunmehr kann der Greifer entlang der Führung 66 in die in Fig. 1 gestrichelt dargestellte Lage 64a verfahren werden. Im Verlauf dieser Bewegung wird der Hohlkörper aus der offenen Blasform 10a,b entfernt, wobei zweckmäßigerweise vorher irgendwelche in den Hohlkörper durch Öffnungen in der Wandung desselben hineinragende Teile wie Blasdorn oder dgl. aus dem Hohlkörper herausgezogen worden sind. Bei in der Position 64a befindlichem Greifer befindet sich der von diesem getragene Hohlkörper oberhalb eines Förderers 68, auf den der Hohlkörper abgesetzt wird, um zur weiteren Nachbearbeitung irgendwelchen Einrichtungen zugeführt zu werden.

Sobald der Hohlkörper vom Greifer 64 erfaßt und die Blasform geöffnet worden ist, wird die Blasform-Einheit 10 bei geöffneter Blasform in die Aufnahmestation unterhalb des Extrusionskopfes 44 verschwenkt. Die Verschwenkung der Blasform-Einheit kann somit bereits beginnen, bevor der Entnahmegreifer die Position 64a erreicht hat. Diese Verschwenkung entspricht der in Verbindung mit Fig. 5 beschriebenen Verschwenkung der Blasform-Einheit 12 in Richtung des Pfeiles 58. Dazu ist nach Erreichen der Position gemäß Fig. 7 die Kolbenstange 56 der Zylinder-Kolben-Einheit 72 (Fig. 4 und 5) mit dem Gestell 34 der Blasform-Einheit 10 verbunden worden.

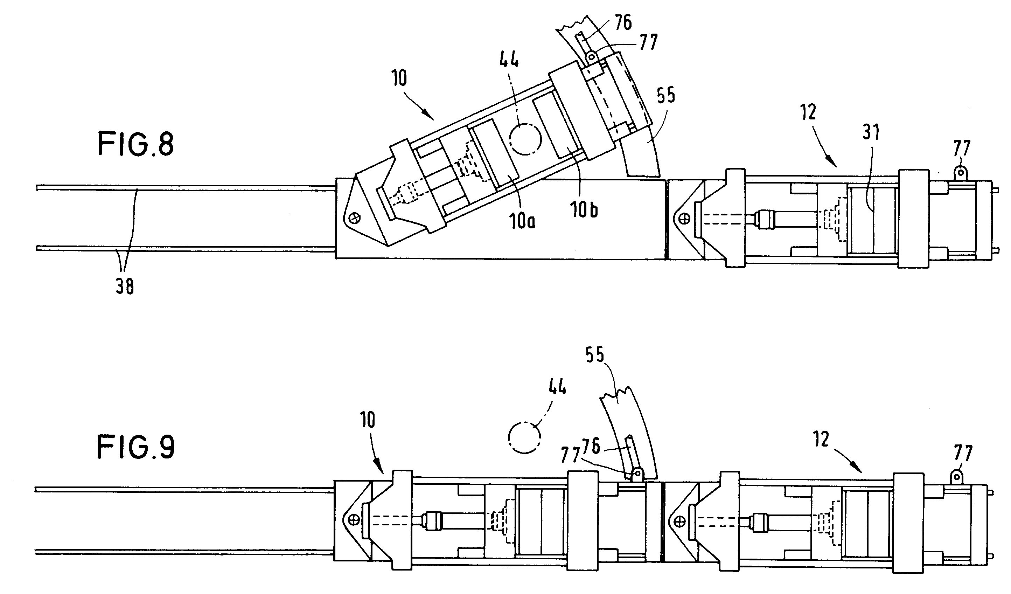

In der Aufnahmestation wird die Blasform 10a,b in der bereits im Zusammenhang mit der Blasform 12a,b beschriebenen Weise um den Vorformling 46 geschlossen und anschließend durch die Zylinder-Kolben-Einheit 72 in Richtung des Pfeiles 60 in die lineare Position zurückverschwenkt, in welcher sich die Blasform 10a, 10b in der Entnahmestation befindet. Diese Position ist in Fig. 9 dargestellt. Danach erfolgt das Verfahren der beiden Blasform-Einheiten 10 und 12 in Richtung des Pfeiles 17, in die in Fig. 4 dargestellte Ausgangsposition, wobei jedoch im Unterschied zu Fig. 4 die Blasform 12a,b noch geschlossen ist. D.h., daß sich die Blasform 12a,b nunmehr in der Entnahmestation befindet. Es erfolgt dann in der bereits im Zusammenhang mit der Blasform-Einheit 10 unter Bezugnahme auf Fig. 7 beschriebenen Entnahme des zuvor hergestellten Hohlkörpers, wobei die Teile wieder die in Fig. 4 dargestellten Positionen einnehmen.

Insbesondere Fig. 1 läßt erkennen, daß die Blasform-Einheit 10 zwischen den Stationen A und B und die Blasform-Einheit 12 zwischen den Stationen B und C hin- und herbewegt wird, wobei den beiden Blasform-Einheiten nicht nur, wie es allgemein üblich ist, dieselbe Aufnahmestation zur Aufnahme des Vorformlings benutzen. Vielmehr ist für auch die Entnahme der in beiden Blasform-Einheiten aufgeweiteten Hohlkörper nur eine gemeinsame Position vorhanden, so daß die dazu erforderlichen Einrichtungen, wie b. B. auch die Zylinder-Kolben-Einheit 72, nur einmal vorhanden zu sein brauchen. Ein weiterer wesentlicher Vorteil der Vorrichtung gemäß der Erfindung besteht darin, daß auch die Zuführung von irgendwelchen Teilen in die Blasform für beide Blasform-Einheiten an derselben Stelle erfolgen kann, und zwar bei in Entnahme- und/oder Aufnahmeposition befindlicher Blasform. Insbesondere aus Fig. 1 geht hervor, daß die in der Aufnahmeposition befindliche Blasform sowohl von der Seite, an welcher sich der Holm 28 befindet, als auch von der Seite, an welcher sich die Stütze 24 befindet, zugänglich ist. Es ist also ohne weiteres möglich, irgendwelche Einlegeteile, die in der Blasform mit dem darin aus dem Vorformling herzustellenden Hohlkörper verbunden werden müssen, bei in der Aufnahmeposition befindlicher Blasform in die Form einzubringen, solange diese noch geöffnet ist. Das Anbringen solcher Zusatzteile am Hohlkörper innerhalb der Blasform ist insbesondere bei Großbehältern, beispielsweise Kfz-Tanks, häufig erforderlich.

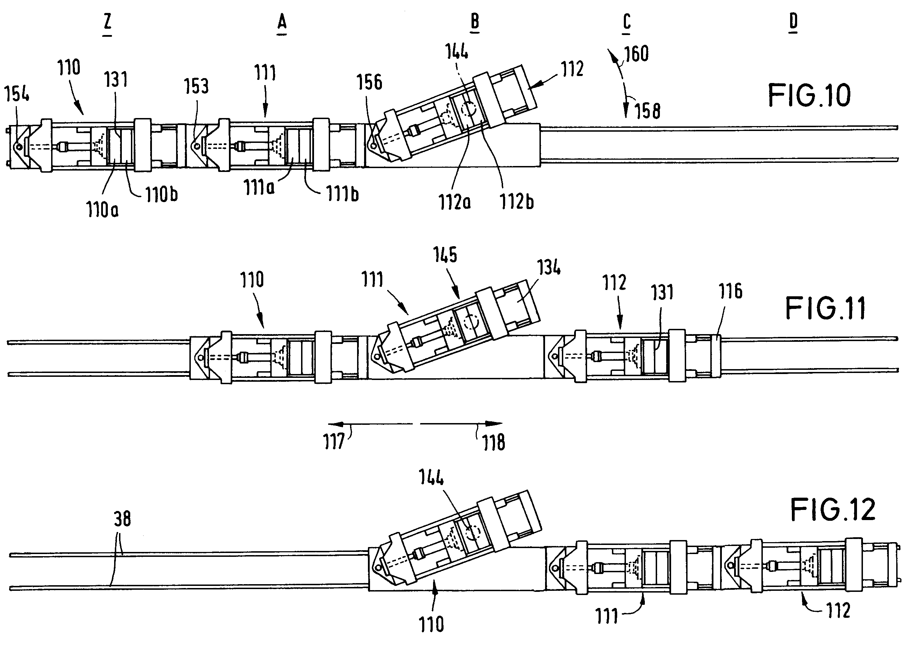

Die Erfindung ist nicht auf eine Ausführung mit lediglich zwei Blasform-Einheiten beschränkt. So zeigen die Figuren 10 - 12 eine Ausführungsform mit drei Blasform-Einheiten 110, 111 und 112, die ebenfalls so angeordnet und angebracht sind, wie dies im Zusammenhang mit dem Ausführungsbeispiel gemäß den Figuren 1 - 9 vorstehend beschrieben worden ist. Demzufolge werden gleiche Teile auch mit gleichen Bezugszeichen versehen, die jedoch bei der Ausführungsform gemäß den Figuren 10 - 12 um 100 höher sind.

Zu Beginn des im folgenden beschriebenen Arbeitsablaufes einer Vorrichtung mit drei Blasform-Einheiten 110, 111, 112 befindet sich die, bezogen auf die Darstellungen in den Figuren 10 - 12, rechts befindliche Blasform-Einheit 112 in der Station B, in welcher das Aufnehmen des Vorformlings durch die Blasform, wenn diese ihre verschwenkte Position einnimmt, und das Herausnehmen des aufgeweiteten Hohlkörpers aus der Blasform, wenn diese ihre lineare Position einnimmt, stattfinden. Die Blasform-Einheit 112 ist in Fig. 10 in die Aufnahmeposition verschwenkt, so daß sich die Blasform 112a, 112b unterhalb des Extrusionskopfes 144 befindet. Die Figur 10 zeigt die Lage der Teile unmittelbar nach Schließen der Blasform 112a, 112b um den am Extrusionskopf hängenden Vorformling. Unmittelbar danach wird die Blasform in Richtung des Pfeiles 158 in ihre lineare Position zurückverschwenkt, in welcher sie parallel zu den anderen Blasform-Einheiten 110 und 111 verläuft. Das Zurückschwenken in die lineare Position erfolgt im allgemeinen unmittelbar nach dem Schließen der Blasform, um für den kontinuierlich aus dem Spritzkopf austretenden Vorformling Platz unterhalb des Spritzkopfes zu schaffen. Bei der Schwenkbewegung aus der Aufnahmeposition in die lineare Position wird der Vorformling vom Extrusionskopf abgetrennt.

Nachdem die Blasform-Einheit 112 ihre lineare Position erreicht hat, werden die drei Blasform-Einheiten 110, 111, 112 um die Länge etwa einer Blasform-Einheit in Richtung des Pfeiles 118, also nach rechts, verfahren, so daß die mittlere Blasform-Einheit 111 in die Station B gelangt, während die Blasform-Einheit 112, die den zuvor hergestellten Vorformling aufgenommen hat, sich nunmehr in der Station C befindet, in welcher das Abkühlen des in der Blasform 112a, 112b mittlerweile aufgeweiteten Hohlkörpers beginnt.

Da die Blasform-Einheit 111 in einem vorausgegangenen Arbeitszyklus bereits einen Vorformling aufgenommen und zum Hohlkörper aufgeweitet hatte, enthält die Blasform 111a,b einen Hohlkörper, der zunächst aus der Blasform herausgenommen werden muß, bevor diese den folgenden Vorformling, der zwischenzeitlich extrudiert wird, aufnehmen kann. Nach Eintreffen in der Station B wird demzufolge zunächst die Blasform 111a,b geöffnet, so daß sich die in Fig. 4 im Zusammenhang mit der Blasform-Einheit 12 dargestellte Lage der Teile ergibt. Es wird dann in der bereits im Zusammenhang mit Fig. 1 beschriebenen Weise unter Verwendung eines Greifers oder auch anderer Mittel der aufgeweitete Hohlkörper aus der Form herausgenommen und gegebenenfalls zu nachgeordneten Behandlungsstationen transportiert. Die Blasform-Einheit 111 mit der geöffneten, leeren Blasform wird dann in die Position gemäß Fig. 11, also in die Aufnahmeposition in Richtung des Pfeiles 160 verschwenkt und nach Aufnahme des Vorformlings in Richtung des Pfeiles 158 in die lineare Position zurückgeschwenkt.

Im Verlauf der nachfolgenden weiteren Verschiebung der drei Blasform-Einheiten 110, 111, 112 in Richtung des Pfeiles 118, also nach rechts, gelangt die dritte Blasform-Einheit 110 in die Station B, wobei die Blasform-Einheit 112 aus der Station C in die Station D verschoben wird und die Blasform-Einheit 111 aus der Station B in die Station C verschoben wird. Für den mittlerweile in der Blasform 111a,b aufgeweiteten Hohlkörper beginnt in der Station C der Abkühlvorgang. Gleichzeitig wird in der Station das Abkühlen des in der Blasform 112a,b befindlichen Hohlkörpers in der Station D fortgesetzt.

In der Station B wird in der schon beschriebenen Weise zunächst bei in linearer Position befindlicher Blasform-Einheit 110 der im vorausgegangenen Arbeitszyklus hergestellte Hohlkörper entnommen, worauf dann die geöffnete Blasform in die in Fig. 12 dargestellte Aufnahmeposition verschwenkt wird. Die Figur 12 zeigt ebenfalls die Blasform 110a, 110b in bereits geschlossenem Zustand, also unmittelbar vor Beginn der Verschwenkung in Richtung des Pfeiles 158 zurück in die lineare Position. Sobald diese erreicht ist, werden die Blasform-Einheiten 110, 111, 112 aus der Position gemäß Fig. 12 in die der Fig. 10, also in Richtung des Pfeiles 117, in die Ausgangsposition zurückbewegt, worauf dann aus der nunmehr in der Station B befindlichen Blasform 112a,b der zuvor hergestellte Hohlkörper entnommen und die Blasform-Einheit 112 alsdann wieder in Richtung des Pfeiles 160 in die in Fig. 10 dargestellte Aufnahmeposition verschwenkt wird, worauf sich die vorbeschriebenen Arbeitsabläufe wiederholen.

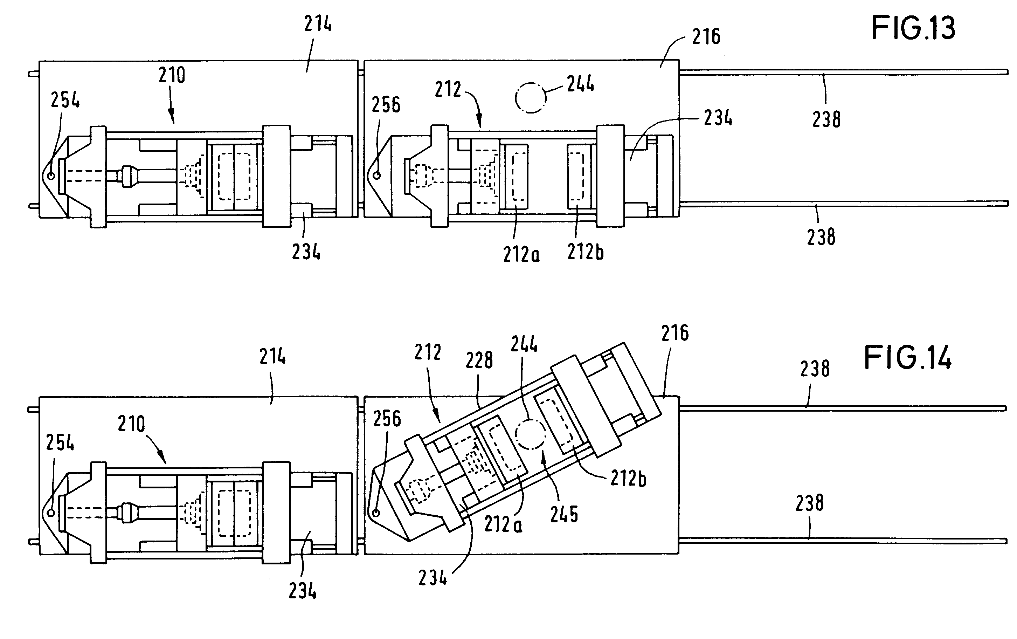

Die Ausführungsform gemäß den Fig. 13 und 14 entspricht in ihrem grundsätzlichen Aufbau der Ausführunsform gemäß den Fig. 1 - 9, so daß entsprechende Teile auch mit gleichen, um 200 höheren Bezugszeichen versehen sind. Es sind ebenfalls zwei Blasform-Einheiten 210, 212 vorhanden, die wechselweise in die Entnahmestation verfahren und dann in die Aufnahmeposition verschwenkt werden. Der wesentliche Unterschied gegenüber dem Ausführungsbeispiel gemäß den Fig. 1 - 9 besteht darin, daß der Wagen 214 bzw. 216 eine größere Breite hat, so daß jedes Gestell 234 auch in seiner in die Aufnahmeposition 245 verschwenkten Lage durch den Wagen 214 bzw. 216 soweit abgestützt wird, daß es keines zusätzlichen Stütz- bzw. Führungsmittels bedarf. Demzufolge weisen auch die beiden das Gleis für die Wagen 214, 216 bildenden Schienen 238 einen größeren Abstand voneinander auf. Auch hier kann analog der Ausführungsform gemäß den Fig. 1 - 9 ein gemeinsames Antriebsmittel zur Durchführung der Schwenkbewegungen zwischen Entnahmeposition und Aufnahmestation vorgesehen sein. Es sind aber auch andere Anordnungen denkbar, wie sie im folgenden im Zusammenhang mit weiteren Ausführungsbeispielen beschrieben werden.

Beim Ausführungsbeispiel gemäß Fig. 15, in welchem der Einfachheit halber nur ein Wagen dargestellt ist, dessen grundsätzlicher Aufbau jedoch ebenfalls mit dem gemäß den Fig. 1 - 9 übereinstimmt, so daß gleiche Teile mit gleichen, jedoch um 300 höheren Bezugszeichen versehen sind, ist jeder Blasform-Einheit 310, 314 ein eigenes Antriebsmittel in Form einer Zylinder-Kolben-Einheit 372 zugeordnet, durch welches die Schwenkbewegungen zwischen Entnahmeposition und Aufnahmeposition durchgeführt werden. Bei dieser Ausführungsform sind die beiden Wagen 314, 316 über geeignete, lösbare Mittel 378 miteinander gekoppelt, so daß lediglich der Wagen 314 mit einem Antriebsmotor 380 für den Antrieb eines Räderpaares 336 versehen ist. Durch den Elektromotor 380 wird ein Zahnrad 381 angetrieben, welches auf der ein Räderpaar 336 tragenden Welle 382 fest angebracht ist. Die Anordnung kann jedoch auch so getroffen sein, daß das Zahnrad 381 mit einer zwischen den beiden Schien rad 381 mit e stationären Zahnstange in Eingriff ist und auf diese Weise den Transport der beiden Wagen 314, 316 in Richtung der Pfeile 17, 18 bewirkt. Eine solche Antriebsanordnung ermöglicht mit einfachen Mitteln eine sehr genaue Positionierung der Wagen in der Station B. Dies ist wichtig für die präzise Positionierung der Blasform bei der Aufnahme des Vorformlings.

Die Gestelle 334, die die Blasform-Einheit 310 bzw. 312 tragen, sind an ihren dem Schwenkpunkt 354 bzw. 356 abgekehrten Ende mit Rädern oder Rollen 384 versehen, die auf dem Stützmittel 355 laufen. An seinem den Schienen 338 abgekehrten Ende ist das Stützmittel 355 mit einem Anschlag 386 versehen, durch welchen die Lage des Gestells und damit der jeweils zugehörigen Blasform-Einheit in der Aufnahmeposition bestimmt wird. Aus Gründen der Übersichtlichkeit ist in Fig. 15 die Blasform-Einheit nicht dargestellt.

Bei Anwendung der Schwenkbewegung zur Überbrückung des Abstandes zwischen der linearen Position und der Aufnahmestation ist das Dreiplatten-System besonders vorteilhaft, da die dabei vorhandene oder mögliche außermittige Anordnung der Blasform es erlaubt, bereits bei einer kleinen Schwenkbewegung im Bogenmaß die Blasform in den Bereich der Aufnahmestation und somit aus dem Bereich der Entnahmestion zu bringen, um die gute Zugänglichkeit von der Stirnseite, an welcher sich die Stütze 24 befindet, zu erreichen. Voraussetzung ist lediglich, daß die Schwenkachse 354 bzw. 356 nahe jenem Ende des Gestells 334 angeordnet ist, von welchem die Blasform am weitesten entfernt ist. Das Vorhandensein der Stütze 24 wird im allgemeinen die Zugänglichkeit zum Innenbereich der geöffneten Blasform nicht erschweren, da, wie nicht zuletzt Fig. 3 zeigt, unterhalb der Stütze 24 genug Raum vorhanden ist, um in den Bereich unterhalb der eigentlichen Blasformteile zu gelangen. Die vorerwähnten Einlegeteile sind überwiegend in diesem Bereich zu plazieren, um sie dann mit dem Vorformling bzw. dem daraus sich bildenden Hohlkörper zu verbinden.

Es ist auch möglich, die einzelnen Blasform-Einheiten nicht durch eine Schwenkbewegung, sondern durch eine senkrecht zu den Bewegungsrichtungen 17, 18 erfolgende Bewegung, die somit etwa parallel zur Führung 66 (Fig. 1) verläuft, von der linearen Entnahmeposition in die Aufnahmeposition zu bringen, wobei dann die Blasform-Einheiten auch in der Aufnahmeposition jeweils eine Position parallel zur linearen Position in der Entnahmestation einnehmen. Eine solche Ausführungsform weist ebenfalls alle vorgenannten Vorteile bezüglich nur einer Entnahmestation und der Möglichkeit der Verwendung nur einer Station für das Einbringen irgendwelcher Einlegeteile auf. Jedoch können die Einrichtungen für hin- und hergehende Querbewegungen parallel möglicherweise einen etwas größeren maschinellen Aufwand und auch einen größeren Raumbedarf erfordern.

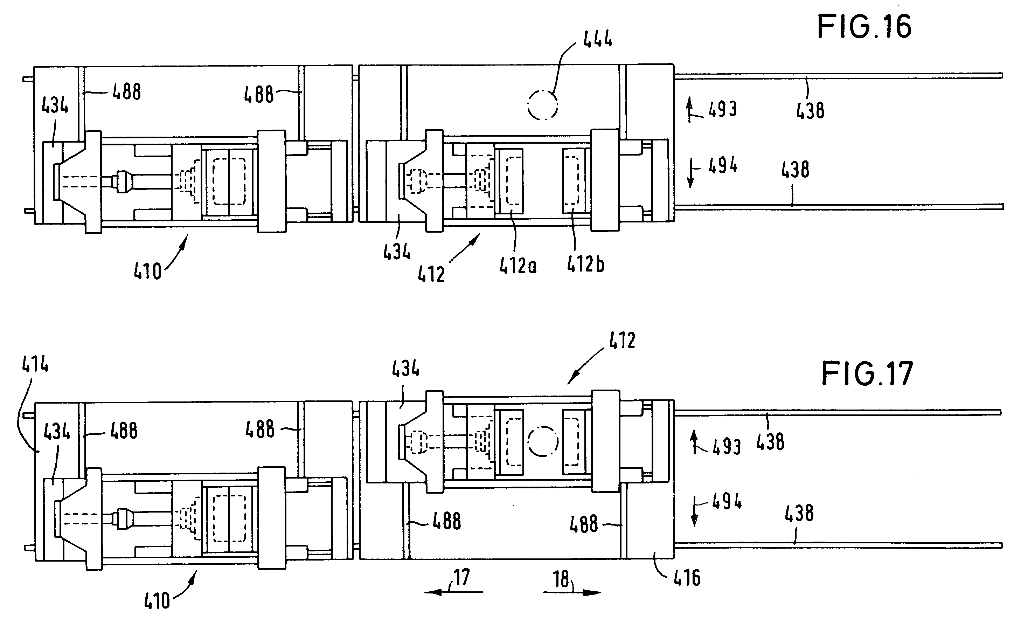

Beim Ausführungsbeispiel gemäß den Fig. 16 und 17 sind die Teile, soweit sie denen des Ausführungsbeispiels gemäß Fig. 1 - 9 entsprechen, mit gleichen, jedoch um 400 höheren Bezugszeichen versehen. Die beiden Blasform-Einheiten 410, 412 werden auch jeweils von einem Gestell 434 getragen, welches jedoch nicht schwenkbar, sondern senkrecht zu den Transportrichtungen 17, 18 der Wagen jeweils auf von diesen getragenen linearen Führungen 488 verfahrbar ist. Die beiden Wagen 414, 416 nehmen in Fig. 16 eine Position ein, die der Position der Wagen 14, 16 in der Fig. 4 des Ausführungsbeispiels gemäß den Fig. 1 - 9 entspricht. D.h., daß sich der Wagen 416 mit der darauf befindlichen Blasform-Einheit 412 in der Entnahmeposition, also neben der durch den Extrusionskopf 444 bestimmten Aufnahmeposition befindet. Nach öffnen der Blasform 412a, 412b und Herausnehmen des im vorangegangenen Arbeitszyklus hergestellten Hohlkörpers wird das Gestell 434 mit der darauf befindlichen Blasform-Einheit 412 und mit noch geöffneter Blasform aus der Position gemäß Fig. 16 in die gemäß Fig. 17 verfahren, um den dort befindlichen Vorformling aufzunehmen. Dabei besteht ebenfalls die Möglichkeit, in der Aufnahmeposition, ggf. zusätzlich oder alternativ auch in der Entnahmeposition, irgendwelche Zusatzteile, die mit dem in der Blasform aus dem Vorformling herzustellenden Hohlkörper verbunden werden sollen, in die Blasform einzulegen oder sonstwie anzubringen. Nachdem die Blasform 412a, 412b um den Vorformling in der Aufnahmestation geschlossen worden ist, wird das Gestell 434 mit der Blasform-Einheit 412 entlang den Führungen 488 wieder in die Position gemäß Fig. 16 zurückgefahren, worauf dann die übrigen Arbeitsschritte innerhalb des Arbeitszyklus' in der üblichen Weise ablaufen. D.h., daß die beiden Wagen 414, 416 - durch einen gemeinsamen oder auch durch getrennte Antriebe angetrieben - nach rechts verfahren werden, so daß die Blasform-Einheit 410 in die Entnahmeposition gelangt, wobei dann in der bereits beschriebenen Weise die weiteren Arbeitsschritte ablaufen. Die beiden Wagen 414, 416 sind hier auch analog dem Ausführungsbeispiel gemäß den Fig. 13 und 14 so breit, daß die Querbewegungen des jeweiligen Gestells in Richtung der Pfeile 493 bzw. 494 mit von ihm getragener Blasform-Einheit auf dem Wagen erfolgt.

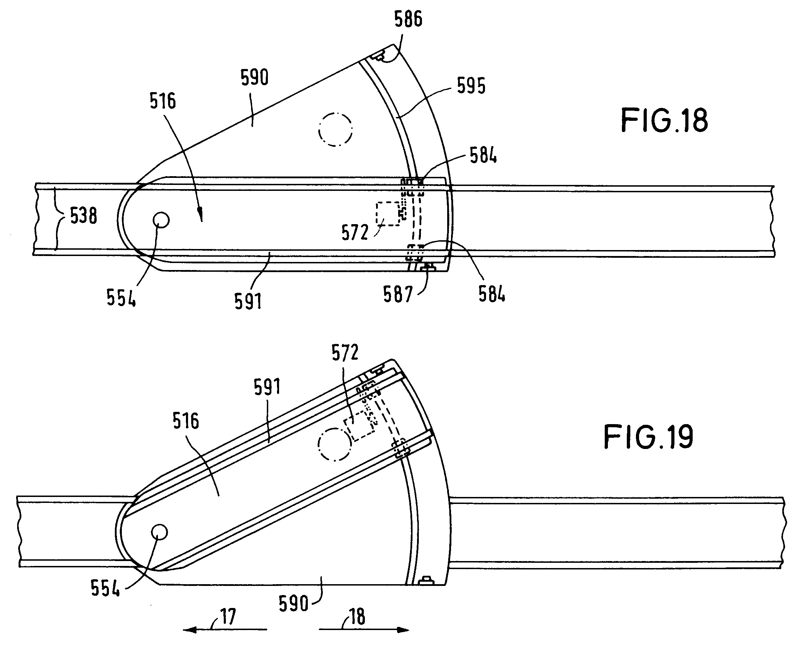

Das Ausführungsbeispiel gemäß den Fig. 18 und 19, in welchem nur ein Wagen dargestellt ist und Teile, die denen des Ausführungsbeispiels gemäß den Fig. 1 - 9 entsprechen, mit gleichen, jedoch um 500 höheren Bezugszeichen versehen sind, unterscheidet sich von allen bisher erörterten Ausführungsbeispielen dadurch, daß nicht nur die jeweilge Blasform-Einheit gegenüber dem Wagen zwischen Entnahmeposition und Aufnahmeposition hin- und herbewegt wird. Vielmehr wird der Wagen in seiner Gesamtheit bewegt, wobei es sich bei der Ausführungsform gemäß den Fig. 18 und 19 um eine Schwenkbewegung handelt. Dazu ist das von den Schienen 538 gebildete Gleis, auf welchem die Wagen in den Richtungen 17 und 18 verfahren werden, im Bereich der Entnahmestation mit einem Gleisabschnitt versehen, der um den Schwenkpunkt 554 gegenüber den im übrigen stationären Gleisabschnitten in horizontaler Ebene verschwenkbar angeordnet ist. Zweckmäßig ist unterhalb des schwenkbaren Gleisabschnittes eine Plattform oder dgl. 590 vorgesehen, auf welcher der schwenkbare Gleisbereich 591 über von ihm getragene Räder oder Rollen 584 abgestützt ist. Letztere laufen auf einer Schiene oder sonstigen Führung 595, die entsprechend der Schwenkbewegung gekrümmt verläuft. Der Gleisabschnitt 591 ist mit einem Elektromotor 572 versehen, der über geeignete Mittel wenigstens eines der beiden Räder 584 antreibt. Die Endpositionen des Gleisabschnittes 591 werden durch Anschläge 586, 587 bestimmt. Bei dieser Ausführungsform ist ein besonderes Gestell oder ein besonderer Rahmen, der jeweils die Blasform-Einheit trägt, nicht erforderlich.

Auch beim Ausführungsbeispiel gemäß Fig. 18 und 19 sind zwei oder drei Wagen vorhanden, die jedoch, wenn sie zum Zwecke des Transports in die Richtungen 17 und 18 miteinander verbunden sind, zum Zwecke der Durchführung der Schwenkbewegungen zwischen Entnahmestation und Aufnahmestation entkoppelt werden müssen, es sei denn, daß besondere Kopplungsmittel vorgesehen sind, die derartige Schwenkbewegungen ermöglichen. Aus Gründen der Übersichtlichkeit ist in den Fig. 18 und 19 die Blasform-Einheit nicht dargestellt.

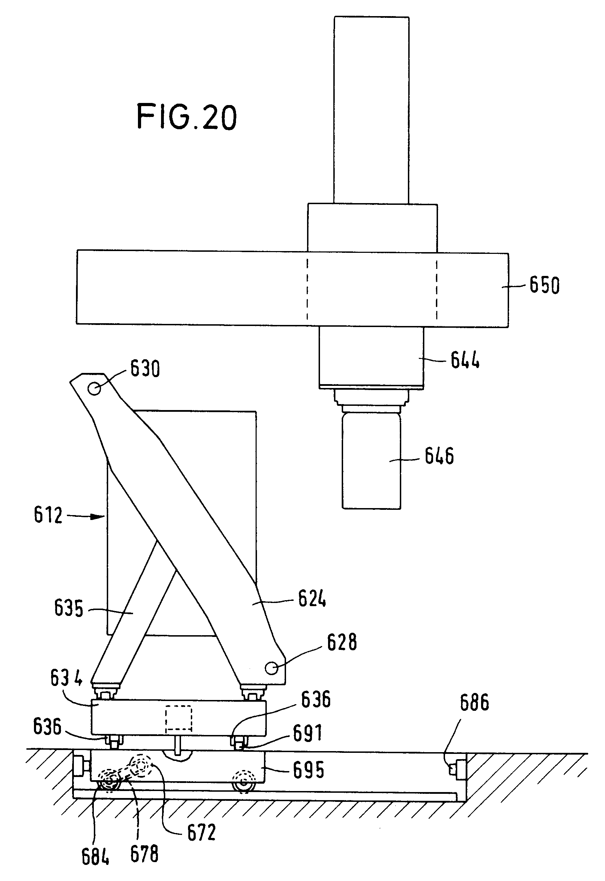

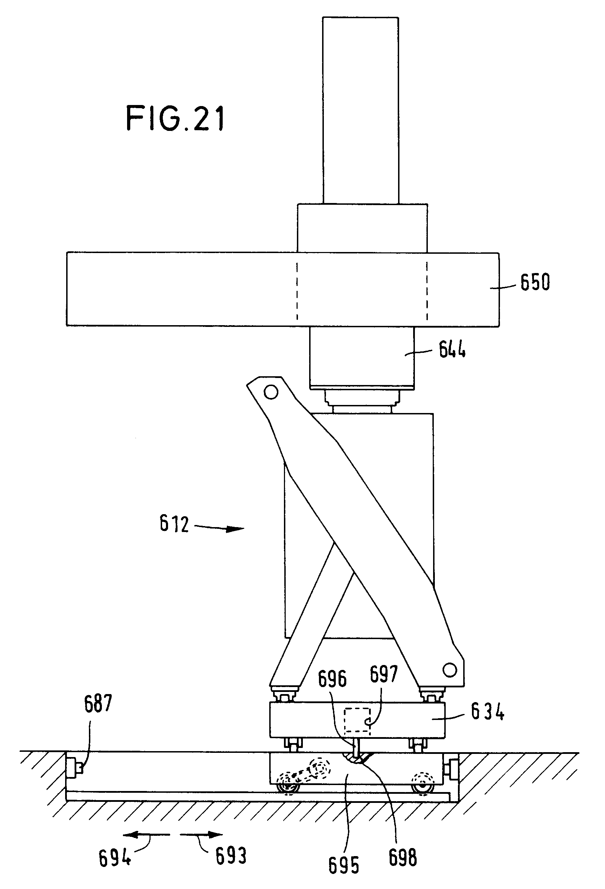

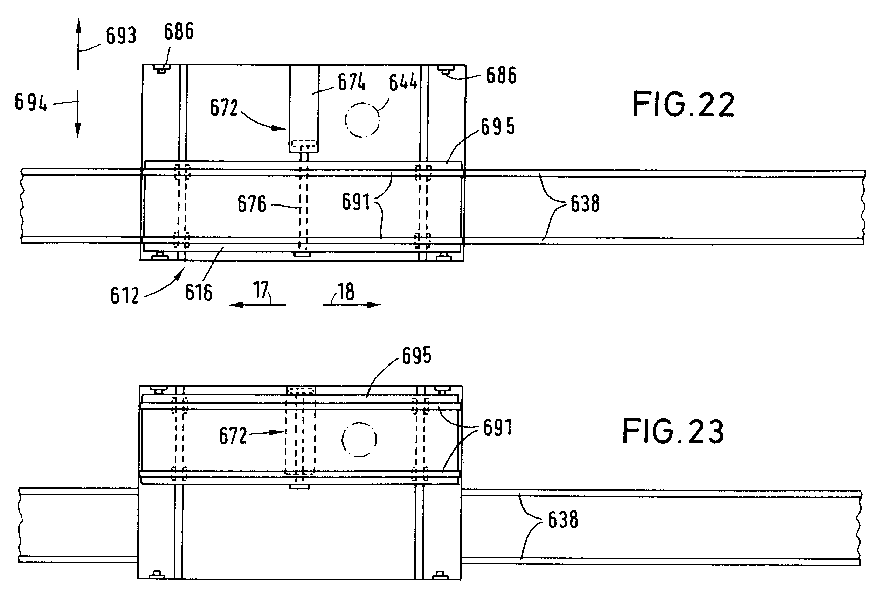

Das Ausführungsbeispiel gemäß den Fig. 20 - 23 unterscheidet sich von dem gemäß den Fig. 18 und 19 insbesondere dadurch, daß der Abstand zwischen Entnahmestation und Aufnahmeposition nicht durch eine Schwenkbewegung, sondern vielmehr analog der Ausführungsform gemäß den Fig. 16 und 17 durch eine quer zu den Schienen für den Transport der Wagen in den Richtungen 17 und 18 erfolgende lineare Verschiebung erfolgt. Dem Ausführungsbeispiel gemäß den Fig. 1 - 9 entsprechende Teile sind mit gleichen, jedoch um 600 höheren Bezugszeichen versehen. Die in Richtung der Pfeile 693 und 694 erfolgenden Verschiebungen machen es erforderlich, daß ein entsprechend verschiebbar angeordneter Gleisabschnitt 691 vorgesehen ist, der von einem Wagen 695 getragen wird. Wie insbesondere die Fig. 20 und 21 erkennen lassen, ist die Anordnung so getroffen, daß die Laufräder 636 für den Transport der Blasform-Einheiten in den Richtungen 17, 18 an dem dem Gestell 34 des Ausführungsbeispiels gemäß den Fig. 1 - 9 entsprechenden Bauteil 634 angebracht sind. Die Position, die die beiden Blasform-Einheiten in den Fig. 20 und 22 einnehmen, entspricht der Position der entsprechenden Blasform-Einheiten in Fig. 4. D.h., daß sich die eine der beiden Blasform-Einheiten, nämlich die Blasform-Einheit 612, in der Entnahmestation seitlich neben der Aufnahmeposition befindet. In dieser Station wird die Blasform-Einheit 612 mit dem zugehörigen Gestell 634 von dem verschiebbar angeordneten Gleisabschnitt 691 getragen, dessen Schienenabschnitte mit den stationären Schienenabschnitten 638 fluchten. Sobald die Blasform-Einheit 612 im Zuge der Transportbewegung in Richtung des Pfeiles 17 oder 18 die Entformstation gemäß Fig. 20 und 21 erreicht hat, wird durch Verschieben eines Kolbens 696, der in einem Zylinder 697 angeordnet ist, ein vom Kolben 696 getragener Stift in eine mit einem entsprechenden Querschnitt versehene Ausnehmung 698 im Wagen 695 eingeführt. Da Kolben 696 und Zylinder 697 am Gestell 634 angebracht sind, bewirkt der in seiner unteren, wirksamen Stellung befindliche Stift 698 eine formschlüssige Verbindung zwischen Gestell 634 und Wagen 695, so daß beide Teile nicht mehr relativ gegeneinander bewegbar sind. Nach Entnahme des im vorangegangenen Arbeitszyklus' hergestellten Hohlkörpers aus der Blasform-Einheit 612 und ggf. nach Einbringen von irgendwelchen Einlegeteilen in die Blasform in der Entnahmestation wird die Blasform-Einheit 612 durch entsprechendes Verschieben des Wagens 695 in Richtung des Pfeiles 693 in die Position gemäß den Fig. 21 und 23 gebracht, in welcher sich die geöffnete Blasform unterhalb des Extrusionskopfes 644 befindet. In der Aufnahmestation wird dann, nachdem dort ggf. Einlegeteile in die Blasform eingebracht worden sind, der am Extrusionskopf 644 hängende Vorformling von der sich schließenden Blasform aufgenommen, worauf dann die Blasformeinheit 612 in Richtung des Pfeiles 694 (Fig. 22) wieder in die Ausgangsposition zurückgefahren wird, die in den Fig. 20 und 22 dargestellt ist. Nach Aufheben der Verriegelung durch den Stift 698 erfolgt dann die bereits im Zusammenhang mit den anderen Ausführungsbeispielen genannte Verschiebung in Richtung des Pfeiles 18, in deren Verlauf dann die andere Blasformeinheit 610 in die Entnahmestation und damit auf den vom Wagen 695 getragenen Gleisabschnitt gelangt.

Bezüglich des Antriebs für die Bewegungen des Wagens 695 sind in den Fig. 20 - 23 zwei Varianten dargestellt. In den Fig. 20 und 21 ist im Wagen 695 ein Elektromotor 672 angeordnet, der über eine Kette oder dgl. eines der Räder 684 oder Radpaare des Wagens 695 antreibt.

In den Fig. 22 und 23, in denen der Einfachheit halber jeweils nur ein Wagen dargestellt ist, wird die Querbewegung durch eine Zylinder-Kolben-Einheit 672 bewirkt, deren Zylinder 674 an einem geeigneten Widerlager angebracht und deren Kolbenstange 676 mit dem Wagen 695 fest verbunden sein kann. Eine lösbare Anbringung der Kolbenstange analog der Ausführungsform gemäß den Fig. 1 - 9 ist nicht erforderlich, da beide oder ggf. auch alle drei Blasform-Einheiten mit jeweils zugehörigem Gestell von demselben Wagen 695 zwischen Entnahmestation und Aufnahmeposition hin- und herbewegt werden. Selbstverständlich gilt auch hier, daß, falls die Wagen mit einem gemeinsamen Antrieb für die Transportbewegungen in Richtung der Pfeile 17, 18 versehen sein sollten, diese Wagen entkoppelt werden müssen, um die Querbewegung des jeweils in der Entnahmestation befindlichen Wagens zu ermöglichen. Aus Gründen der Übersichtlichkeit ist in den Fig. 22 und 23 die Blasform-Einheit nicht dargestellt.

Bei der Ausführungsform gemäß Fig. 1 - 9 sind sämtliche Blasform-Einheiten einer Extrusions-Blasvorrichtung auf dem Schlitten 14, 16 und den Gestellen 34 so angeordnet, daß die Schwenkbewegungen zwischen Entnahmeposition und Aufnahmeposition jeweils in derselben Richtung erfolgen. Es ist natürlich auch möglich, eine Anordnung vorzusehen, bei welcher die Schwenkachse beispielsweise der Blasform-Einheit 12 abweichend von der dargestellten Ausführung am rechten Endbereich des Schlittens 16 angeordnet wäre, wobei es dann auch vorteilhaft wäre, die Blasform-Einheit insgesamt um 180° um eine vertikale Achse verschwenkt auf dem zugehörigen Gestell 34 anzuordnen. In diesem Falle würde die Blasform-Einheit 12 bei der Verschwenkung aus der Entnahmeposition in die Aufnahmeposition eine Bewegung im Uhrzeigersinne ausführen, wohingegen es bei der Blasform-Einheit 10 bei einer Schwenkbewegung entgegen dem Uhrzeigersinne bliebe. Dies wäre dann nicht optimal, wenn, wie es häufig der Fall ist, die Austrittsöffnung des Extrusionskopfes 44 für den Vorformling in Umfangsrichtung unterschiedlich und nicht symmetrisch profiliert ist. Im allgemeinen ist es zweckmäßig, gegebenenfalls sogar notwendig, die Blasform und damit das Blasformnest in der Aufnahmeposition in bestimmter Weise an eine Umfangsprofilierung des Schlauches anzupassen, um einen in optimaler Weise ausgestalteten Hohlkörper herstellen zu können.

Die Ausführungsform gemäß den Figuren 10 - 12 zeigt, daß das durch die Erfindung verwirklichte Konzept nicht nur eine Anordnung ermöglicht, bei welcher bestimmte an einer Blasform oder im Zusammenhang mit einer Blasform durchzuführende Arbeiten und Manipulationen bestimmter Art für sämtliche Blasformen in einem den Blasformen gemeinsamen Arbeitsbereich durchgeführt werden können, sondern daß darüber hinaus auch bezüglich der Anzahl der Blasformen eine wesentlich größere Flexibilität besteht als diese bei bekannten Maschinenkonzepten der Fall ist.

So besteht auch die Möglichkeit, zwei Extrusions-Blasform-Vorrichtungen gemäß der Erfindung nebeneinander anzuordnen derart, daß die Entnahmestationen der beiden Vorrichtungen einander gegenüber liegen, also beide im Falle der vorbeschriebenen Ausführungsformen in der Station B angeordnet wären. Es ist dann lediglich erforderlich, den Abstand zwischen den beiden vorteilhafterweise im wesentlichen parallel zueinander verlaufenden Vorrichtungen jedenfalls in der Station, in welcher das Entnehmen der aufgeweiteten Hohlkörper aus der jeweiligen Blasform erfolgt, so zu wählen, daß zwischen beiden Vorrichtungen Entnahmegreifer oder andere Entnahmeeinrichtungen angeordnet werden können, wobei dann für beide Vorrichtungen ein gemeinsames Transportmittel für den Abtransport der hergestellten Hohlkörper ausreicht. Es wäre sogar möglich, beiden Vorrichtungen eine gemeinsame Entnahmeeinrichtung zuzuordnen. Dies und andere Einzelheiten der Ausgestaltung hängen jedoch von den jeweiligen Gegebenheiten, beispielsweise von der Zeit ab, die für das Entnehmen des Hohlkörpers aus einer Blasform und das Absetzen des Hohlkörpers auf einen Förderer benötigt wird. Es ist auch möglich, die beiden Vorrichtungen in Längsrichtung, also parallel zu den Richtungen, in denen die einzelnen Blasform-Einheiten zwischen den Stationen verfahren werden, etwas versetzt gegeneinander anzuordnen derart, daß die Blasformen in der gemeinsamen Entnahmestation nicht genau einander gegenüber liegen, sondern etwas versetzt zueinander sind, um so beispielsweise bei kleinem Abstand zwischen beiden Vorrichtungen die beiden Entnahmeeinrichtungen unterbringen zu können, die dann um das entsprechende Maß in Richtung der Pfeile 14, 18 gegeneinander versetzt wären.

Bei der vorbeschriebenen im wesentlichen parallelen Anordnung zweier derartiger Vorrichtungen würden die Blasform-Einheiten aus der Entnahmestation nach außen, also jeweils von der anderen Vorrichtung weg, in die Aufnahmestation verschwenkt werden.

Weiterhin besteht die Möglichkeit, im Bedarfsfall die Extrusions-Blasvorrichtung auch nur mit einer Blaseinheit zu betreiben. In diesem Fall würde der jeweilige Wagen oder Schlitten lediglich Bewegungen zwischen Aufnahmeposition und Entnahmeposition ausführen. Dies ist insbesondere deshalb von Bedeutung, weil es z. B. bei sämtlichen vorstehend abgehandelten Ausführungsformen die Möglichkeit böte, in einem Störungsfall und/oder bei Wartungsarbeiten, in welchem nur noch eine Blasform-Einheit benutzt werden kann, die Gesamteinrichtung mit nur einer Blasform-Einheit weiterzubetreiben.

Wenngleich bei den vorstehend beschriebenen Ausführungsformen der Erfindung die Position, in welcher die Blasform den Vorformling aufnimmt, dem Extrusionskopf zugeordnet ist derart, daß die Blasform um den am Extrusionskopf hängenden Vorformling geschlossen wird, ist die Erfindung keineswegs auf diese Ausführung beschränkt. Es ist auch möglich, die Aufnahmestation unabhängig, also entfernt vom Extrusionskopf anzuordnen, wobei dann allerdings Mittel vorgesehen sein müßten, um den Vorformling vom Extrusionskopf in die Aufnahmestation zu transportieren. Ein solches Mittel könnte beispielsweise ein Greifer sein, der den Vorformling am Extrusionskopf erfaßt und nach Abtrennen vom Extrusionskopf in die Aufnahmestation bewegt, wobei es sich um eine Bewegung in horizontaler oder auch in vertikaler Ebene, gegebenenfalls aber auch um eine Kombination solcher Bewegungen handeln kann.

## Patentansprüche

1. Vorrichtung zum Herstellen von Hohlkörpern aus thermoplastischem Kunststoff mittels Extrusions-Blasformen mit wenigstens zwei Blasform-Einheiten (10, 12; 110, 111, 112) und einem Extrusionssystem mit wenigstens einem Extrusionskopf (44), wobei jede Blasform-Einheit zwischen einer Aufnahmeposition (45), in welcher die geöffnete Blasform (10a,b, 12a,b; 110a,b; 111a,b; 112a,b) den Vorformling aufnimmt, und wenigstens einer anderen Position (B), in welcher der aufgeweitete Hohlkörper aus der Blasform herausgenommen wird, bewegbar ist, und die wenigstens eine Blasform jeder Blasform-Einheit in wenigstens zwei Teile (10a,b; 12a,b; 110a, 110b; 111a, 111b; 112a, 112b) unterteilt ist und die Teile der Blasform zwischen einem Öffnungszustand, in welchem sie einen Abstand voneinander aufweisen, und einem Schließzustand, in welchem sie aneinander anliegen und die einander zugekehrten Seiten der Blasformteile ein Formnest begrenzen, dessen Kontur der Gestalt des Hohlkörpers entspricht, zu dem der Vorformling durch inneren Überdruck aufgeweitet wird, mittels eines die Öffnungs- und/oder Schließbewegungen bewirkenden Antriebssystems hin- und herbewegbar sind, dadurch gekennzeichnet, daß jede Blasform-Einheit (10, 12; 110, 111, 112) aus einer von der Entnahmestation (B) entfernten Station (ZACD) zunächst in wenigstens einer Richtung (17, 18; 117, 118) in die Entnahmestation (B) bewegt wird, welcher die Aufnahmestation (45) zugeordnet ist, und spätestens nach Erreichen der Entnahmestation (B) geöffnet wird, worauf der zuvor in der Blasform (10a,b, 12a,b; 110a,b, 111a,b, 112a,b) hergestellte Hohlkörper entnommen wird und dann die Blasform-Einheit mittels einer in einer anderen Richtung erfolgenden zweiten Bewegung mit geöffneter Blasform in die Aufnahmeposition (45) bewegt wird, die gegenüber der Bewegungsbahn (38, 38), entlang welcher die Blasform-Einheit in die Entnahmestation (B) bewegt wird, seitlich versetzt angeordnet ist.

2. Vorrichtung nach Anspruch 1, dadurch gekennzeichnet, daß die Bewegung der Blasform-Einheit aus der Entnahmeposition in die Aufnahmeposition senkrecht zu der Bewegung erfolgt, mittels welcher die Blasform-Einheit in die Entnahmeposition bewegt wird.

3. Vorrichtung nach Anspruch 1, dadurch gekennzeichnet, daß die Blasform-Einheit (10, 12; 110, 111, 112) aus der Entnahmeposition mittels einer Schwenkbewegung in die Aufnahmeposition (45) bewegt wird.

4. Vorrichtung nach den Ansprüchen 2 und 3, dadurch gekennzeichnet, daß die wenigstens zwei Blasform-Einheiten (10, 12; 110, 111, 112) in derselben Richtung (58, 158) in die Aufnahmeposition bewegt werden.

5. Vorrichtung nach den Ansprüchen 2 und 3, dadurch gekennzeichnet, daß die wenigstens zwei Blasform-Einheiten (10, 12; 110, 111, 112) in entgegengesetzten Richtungen in die Aufnahmeposition (45) bewegt werden.

6. Vorrichtung nach Anspruch 1, dadurch gekennzeichnet, daß die Bewegungen der wenigstens zwei Blasform-Einheiten (10, 12; 110, 111, 112) zwischen Entnahmestation (B) und einer davon entfernten Station (Z, A, C, D) synchron erfolgen.

7. Vorrichtung nach Anspruch 1, dadurch gekennzeichnet, daß sämtlichen Blasform-Einheiten (10, 12; 110, 111, 112) dieselbe Entnahmestation (B) sowie dieselbe Aufnahmeposition (45) zugeordnet sind.

8. Vorrichtung nach Anspruch 1, dadurch gekennzeichnet, daß die Tragplatten (20a,b; 22a,b) jeder Blasform (10a,b, 12a,b; 110a,b, 111a,b, 112a,b) im wesentlichen senkrecht zu der Richtung (17, 18; 117, 118) verlaufen, in welcher die Blasform-Einheit (10, 12; 110, 111, 112) aus einer entfernten Station (Z,A, C, D) in die Entnahmestation (B) bewegt wird.

9. Vorrichtung nach Anspruch 1, dadurch gekennzeichnet, daß sich die Aufnahmeposition (45) unterhalb des Extrusionskopfes (44; 144) befindet.

10. Vorrichtung nach Anspruch 1, dadurch gekennzeichnet, daß sämtlichen Blasform-Einheiten (10, 12; 110, 111, 112) beim Einführen von Zusatzteilen in die Blasform dieselbe Position einnehmen.

11. Vorrichtung nach Anspruch 1, dadurch gekennzeichnet, daß die Blasform-Einheiten (10, 12; 110, 111, 112) als Dreiplattensysteme ausgebildet sind.

12. Vorrichtung nach Anspruch 1, dadurch gekennzeichnet, daß sämtliche Blasform-Einheiten (110, 111, 112) von einem gemeinsamen Wagen getragen sind.

13. Vorrichtung nach Anspruch 1, dadurch gekennzeichnet, daß für jede Blasform-Einheit (10, 12) ein besonderer Wagen (14, 16) vorgesehen ist.

14. Vorrichtung nach Anspruch 1, dadurch gekennzeichnet, daß die einzelnen Wagen unabhängig voneinander antreibbar bzw. bewegbar sind.

15. Vorrichtung nach Anspruch 13, dadurch gekennzeichnet, daß der Wagen (514, 516; 614, 616), der die Blasform-Einheit trägt, auch zwischen Entnahmeposition und Aufnahmeposition bewegbar ist.

16. Vorrichtung nach Anspruch 2, dadurch gekennzeichnet, daß der Wagen (614, 616), der die Blasform-Einheit trägt, auch senkrecht zu der Bewegung, mittels welcher die Blasform-Einheit in die Entnahmestation bewegt wird, aus der Entnahmesposition in die Aufnahmeposition bewegt wird.

17. Vorrichtung nach Anspruch 3, dadurch gekennzeichnet, daß der Wagen (514, 516), der die Blasform-Einheit trägt, auch mittels einer Schwenkbewegung zwischen Aufnahmeposition und Entnahmeposition bewegt wird.

18. Vorrichtung nach Anspruch 1, dadurch gekennzeichnet, daß die Blasform-Einheit (10, 12; 110, 111, 112) von einem Gestell (34; 134; 234; 334; 434) getragen ist, welches zwischen Entnahmestation und Aufnahmeposition bewegbar auf dem Wagen (14, 16; 116; 216; 314, 414) gelagert ist.

19. Vorrichtung den Ansprüchen 2 und 18, dadurch gekennzeichnet, daß das Gestell (434) gegenüber dem Wagen (414, 416) senkrecht zu der Bewegung (17, 18), mittels welcher die Blasform-Einheit in die Entnahmeposition bewegt wird, zwischen Entnahmeposition und Aufnahmeposition bewegt wird.

20. Vorrichtung nach Anspruch 15, dadurch gekennzeichnet, daß das Gestell (34; 134; 234; 334) schwenkbar am Wagen (14, 16; 114, 116; 214, 216; 314, 316) gelagert ist.

21. Vorrichtung nach Anspruch 17 oder 20, dadurch gekennzeichnet, daß die Schwenkachse (54, 56; 154, 156; 254, 256; 354; 554, 556) an der der Blasform (10a,b, 12a,b; 110a,b, 111a,b, 112a,b) abgekehrten Seite der Blasform-Einheit (10, 12; 110, 111, 112) angeordnet ist.

22. Vorrichtung nach einem der Ansprüche 2 und 3, dadurch gekennzeichnet, daß für die Bewegung der Blasform-Einheit zwischen Entnahmeposition und Aufnahmeposition jeder Blasform-Einheit Antriebsmittel (372; 672) zugeordnet sind.

23. Vorrichtung nach einem der Ansprüche 2 und 3, dadurch gekennzeichnet, daß für die Bewegung zwischen Entnahmestation und Aufnahmeposition stationäre Antriebsmittel (72) vorgesehen sind, die wechselweise mit der jeweils zwischen Entnahmeposition und Aufnahmeposition hin- und herbewegbaren Blasform-Einheiten (10, 12) verbunden werden.

24. Vorrichtung nach Anspruch 1, dadurch gekennzeichnet, daß das Extrusionssystem mit dem wenigstens einen Extrusionskopf (44; 144) zur Herstellung eines Vorformlings mit einer mehrschichtigen Wandung dient.

25. Vorrichtung nach Anspruch 1, dadurch gekennzeichnet, daß die Bewegungen der Blasform-Einheiten zwischen den Stationen (Z, A, C, D) und zwischen Entnahmeposition und Aufnahmeposition in im wesentlichen horizontaler Ebene erfolgen.

26. Vorrichtung nach Anspruch 1, daß die Bewegungen zwischen den Stationen (Z, A, C, D) entlang im wesentlichen linearer Bewegungsbahnen erfolgen.

## Claims

1. Apparatus for the production of hollow bodies from thermoplastic material by means of extrusion blow molding, having at least two blow molding units (10, 12; 110, 111, 112) and an extrusion system having at least one extrusion head (44), wherein each blow molding unit is movable between a receiving position (45) in which the opened blow molding mold (10a, b, 12a, b; 110a, b; 111a, b; 112a, b) receives the preform and at least one other position (B) in which the expanded hollow body is removed from the blow molding mold, and the at least one blow molding mold of each blow molding unit is divided into at least two parts (10a, b; 12a, b; 110a, 110b; 111a, 111b; 112a, 112b) and the parts of the blow molding mold are reciprocable between an open condition in which they are at a spacing from each other and a closed condition in which they bear against each other and the mutually facing sides of the blow molding mold parts define a mold cavity whose contour corresponds to the configuration of the hollow body to which the preform is expanded by an increase internal pressure, the blow molding mold parts being reciprocable by means of a drive system for producing the opening and/or closing movements, characterized in that each blow molding unit (10, 12; 110, 111, 112) is firstly moved from a station (Z, A, C, D) remote from the removal station (B) in at least one direction (17, 18; 117a, 118) into the removal station (B) with which the receiving station (45) is associated, and is opened at the latest after reaching the removal station (B), whereupon the hollow body previously produced in the blow molding mold (10a, b, 12a, b; 110a, b, 111a, b, 112a, b) is removed and then the blow molding unit is moved by means of a second movement in another direction with the blow molding mold open into the receiving position (45) which is arranged laterally displaced relative to the path of movement (38, 38) along which the blow molding unit is moved into the removal station (B).

2. Apparatus as set forth in claim 1 characterized in that the movement of the blow molding unit from the removal position into the receiving position takes place Perpendicularly to the movement by means of which the blow molding unit is moved into the removal position.

3. Apparatus as set forth in claim 1 characterized in that the blow molding unit (10, 12; 110, 111, 112) is moved from the removal position into the receiving position (45) by means of a pivotal movement.

4. Apparatus as set forth in claims 2 and 3 characterized in that the at least two blow molding units (10, 12; 110, 111, 112) are moved into the receiving position in the same direction (58, 158).

5. Apparatus as set forth in claims 2 and 3 characterized in that the at least two blow molding units (10, 12; 110, 111, 112) are moved into the receiving position (45) in opposite directions.

6. Apparatus as set forth in claim 1 characterized in that the movements of the at least two blow molding units (10, 12; 110, 111, 112) between the removal station (B) and a station (Z, A, C, D) remote therefrom take place synchronously.

7. Apparatus as set forth in claim 1 characterized in that the same removal station (B) and the same receiving Position (45) are associated with all blow molding units (10, 12; 110, 111, 112).

8. Apparatus as set forth in claim 1 characterized in that the carrier plates (20a, b; 22a, b) of each blow molding mold (10a, b, 12a, b; 110a, b, 111a, b, 112a, b) extend substantially perpendicularly to the direction (17, 18; 117, 118) in which the blow molding unit (10, 12; 110, 111, 112) is moved from a remote station (Z, A, C, D) into the removal station (B).

9. Apparatus as set forth in claim 1 characterized in that the removal position (45) is disposed beneath the extrusion head (44; 144).

10. Apparatus as set forth in claim 1 characterized in that all blow molding units (10, 12; 110, 111, 112) assume the same position when additional portions are introduced into the blow molding mold.

11. Apparatus as set forth in claim 1 characterized in that the blow molding units (10, 12; 110, 111, 112) are in the form of push-pull clamping systems.

12. Apparatus as set forth in claim 1 characterized in that all blow molding units (110, 111, 112) are carried by a common carriage.

13. Apparatus as set forth in claim 1 characterized in that a particular carriage (14, 16) is provided for each blow molding unit (10, 12).

14. Apparatus as set forth in claim 1 characterized in that the individual carriages are drivable or movable independently of each other.

15. Apparatus as set forth in claim 13 characterized in that the carriage (514, 516; 614, 616) which carries the blow molding unit is also movable between the removal position and the receiving position.

16. Apparatus as set forth in claim 2 characterized in that the carriage (614, 616) which carries the blow molding unit is also moved from the removal position into the receiving position, perpendicularly to the movement by means of which the blow molding unit is moved into the removal station.

17. Apparatus as set forth in claim 3 characterized in that the carriage (514, 516) which carries the blow molding unit is also moved between the receiving position and the removal position by means of a pivotal movement.

18. Apparatus as set forth in claim 1 characterized in that the blow molding unit (10, 12; 110, 111, 112) is carried by a frame structure (34; 134; 234; 334; 434) which is mounted on the carriage (14, 16; 116; 216; 314, 414) movably between the removal station and the receiving position.

19. Apparatus as set forth in claims 2 and 18 characterized in that the frame structure (434) is moved between the removal position and the receiving position relative to the carriage (414, 416) perpendicularly to the movement (17, 18) by means of which the blow molding unit is moved into the removal position.

20. Apparatus as set forth in claim 15 characterized in that the frame structure (34; 134; 234; 334) is mounted pivotably on the carriage (14, 16; 114, 116; 214, 216; 314, 316).

21. Apparatus as set forth in claim 17 or claim 20 characterized in that the pivot axis (54, 56; 154, 156; 254, 256; 354 ; 554, 556) is arranged at the side of the blow molding unit (10, 12; 110, 111, 112), which side is remote from the blow molding mold (10a, b, 12a, b; 110a, b, 111a, b, 112a, b).

22. Apparatus as set forth in one of claims 2 and 3 characterized in that drive means (372; 672) are associated with each blow molding unit for the movement of the blow molding unit between the removal position and the receiving position.

23. Apparatus as set forth in one of claims 2 and 3 characterized in that stationary drive means (72) are provided for the movement between the removal station and the receiving position, which drive means are alternately connected to the respective blow molding units (10, 12) which are reciprocable between the removal position and the receiving position.

24. Apparatus as set forth in claim 1 characterized in that the extrusion system with the at least one extrusion head (44; 144) serves for the production of a preform having a multi-layer wall.

25. Apparatus as set forth in claim 1 characterized in that the movements of the blow molding units between the stations (Z, A, C,D) and between the removal position and the receiving position take place in a substantially horizontal plane.

26. Apparatus as set forth in claim 1 characterized in that the movements between the stations (Z, A, C, D) take place along substantially linear paths of movement.

## Revendications

1. Machine pour fabriquer des corps creux en matière thermoplastique, en les moulant par extrusion-soufflage au moyen d'au moins deux unités de moulage par soufflage (10,12; 110,111,112) associées à un système d'extrusion qui comporte au moins une tête d'extrusion (44), chaque unité de moulage pouvant pour ce faire se déplacer entre une position de réception (45) où le moule de soufflage ouvert (10a,10b; 12a,12b; 110a,110b; 111a,111b; 112a,112b) reçoit l'ébauche, et au moins une autre position (B), où s'effectue l'extraction du corps creux mis en forme par expansion dans le moule, pour le séparer de celui-ci, chaque unité de moulage comportant au moins un moule de soufflage formé d'au moins deux parties (10a,10b; 12a,12b; 110a,110b; 111a,111b; 112a,112b) qui peuvent être manoeuvrées alternativement par un mécanisme de va-et-vient, entre une position ouverte, où les parties du moule sont écartées l'une de l'autre, et une position fermée, où les parties du moule sont en appui l'une contre l'autre, de telle manière que les faces en regard de ces parties du moule définissent une cavité de moulage, dont la forme correspond à celle du corps creux à former par expansion de l'ébauche sous l'effet d'une surpression interne, *caractérisée* en ce que, à partir d'un poste (Z,A,C,D) écarté du poste de démoulage et d'enlèvement (B), chaque unité de moulage (10,12; 110,111,112) subit d'abord un déplacement dans au moins une direction (17,18; 117,118) pour être amenée à l'endroit du poste de démoulage et d'enlèvement (B), associé au poste de réception (45) de l'ébauche, le moule de chaque unité de moulage étant mis en positon d'ouverture au plus tard lorsque l'unité de moulage est arrivée au poste de démoulage et d'enlèvement (B), pour permettre l'enlèvement du corps creux qui vient d'être mis en forme dans le moule (10a,10b; 12a,12b; 110a,110b; 111a,111b; 112a,112b), après quoi l'unité de moulage effectue un deuxième déplacement dans une autre direction, avec son moule en position ouverte, pour venir à l'endroit du poste de réception de l'ébauche (45) qui est décalé latéralement par rapport à la voie (38,38) sur laquelle l'unité de moulage se déplace pour venir à l'endroit du poste de démoulage et d'enlèvement (B).

2. Machine selon la revendication 1, *caractérisée* en ce que le mouvement de chaque unité de moulage, pour passer au poste de réception de l'ébauche à partir du poste de démoulage et d'enlèvement, s'effectue perpendiculairement au sens du mouvement effectué par l'unité de moulage pour venir à l'endroit du poste de démoulage et d'enlèvement.

3. Machine selon la revendication 1, *caractérisée* en ce que l'unité de moulage (10,12; 110,111,112) passe du poste d'enlèvement au poste de réception (45) en effectuant un mouvement de pivotement.

4. Machine selon les revendications 2 et 3, *caractérisée* en ce qu'elle comporte au moins deux unités de moulage par soufflage (10,12; 110,111,112) qui se déplacent dans la même direction (58,158) pour venir à l'endroit du poste de réception.

5. Machine selon les revendications 2 et 3, *caractérisée* en ce que les unités de moulage (10,12; 110,111,112) se déplacent dans des directions opposées pour venir à l'endroit du poste de réception (45).

6. Machine selon la revendication 1, *caractérisée* en ce que les mouvements des deux unités de moulage (10,12; 110,111,1112) que comporte au moins la machine, entre le poste de démoulage et d'enlèvement (B) et un autre poste (Z,A,C,D) éloigné du premier, s'effectuent en synchronisme.

7. Machine selon la revendication 1, *caractérisée* en ce que toutes les unités de moulage (10,12; 110,111,112) utilisent le même poste de démoulage et d'enlèvement (B) et le même poste de réception (45).

8. Machine selon la revendication 1, *caractérisée* en ce que les plaques supports (20a,20b; 22a,22b) de chaque unité de moulage (10a,10b; 12a,12b; 110a,110b; 111a,111b; 112a,112b) sont orientées dans une direction sensiblement perpendiculaire à la direction du déplacement (17,18; 117,118) de chaque unité de moulage (10,12; 110,111,112) vers le poste de démoulage et d'enlèvement (B) à partir d'un poste (Z,A,C,D) éloigné de celui-ci.

9. Machine selon la revendication 1, *caractérisée* en ce que le poste de réception (45) se trouve en dessous de la tête d'extrusion (44; 144).

10. Machine selon la revendication 1, *caractérisée* en ce que toutes les unités de moulage (10,12; 110,111,112) occupent la même position pour la mise en place de pièces rapportées dans le moule.

11. Machine selon la revendication 1, *caractérisée* en ce que les unités de moulage sont du type dit à trois plaques.

12. Machine selon la revendication 1, *caractérisée* en ce que toutes les unités de moulage (110,111,112) sont portées par un chariot commun.

13. Machine selon la revendication 1, *caractérisée* en ce qu'elle compote un chariot séparé (14,16) pour chaque unité de moulage (10,12).

14. Machine selon la revendication 1, *caractérisée* en ce qu'elle comporte des moyens pour commander séparément les mouvements de chacun des chariots.

15. Machine selon la revendication 13, *caractérisée* en ce que le chariot (514,516; 614,616) qui porte l'unité de moulage peut également être déplacé entre la position de démoulage et d'enlèvement et la position de réception.

16. Machine selon la revendication 2, *caractérisée* en ce que le chariot (614,616) qui porte l'unité de moulage peut également être déplacé dans une direction perpendiculaire à la direction du mouvement de l'unité de moulage vers le poste de démoulage et d'enlèvement à partir du poste de réception, et vers ce dernier poste à partir du poste de démoulage et d'enlèvement.

17. Machine selon la revendication 3, *caractérisée* en ce que le chariot (514,516) qui porte l'unité de moulage peut également se déplacer par un mouvement de pivotement entre la position de réception et la position de démoulage et d'enlèvement.

18. Machine selon la revendication 1, *caractérisée* en ce que l'unité de moulage (10,12; 110,111,112) est portée par un châssis (34; 134; 234; 334; 434), qui est monté sur le chariot (14,16; 116; 216; 314; 414) de manière à pouvoir se déplacer entre la position de démoulage et d'enlèvement et la position de réception de l'ébauche.

19. Machine selon les revendications 2 et 18, *caractérisée* en ce que le châssis (434) peut se déplacer par rapport au chariot (414,416) entre la position d'enlèvement et la position de réception, perpendiculairement au mouvement (17,18) effectué par l'unité de moulage pour venir en position d'enlèvement.

20. Machine selon la revendication 15, *caractérisée* en ce que le châssis (34; 134; 234; 334) est monté sur le chariot (14,16; 114,116; 214,216; 314,316) de manière à pouvoir pivoter sur celui-ci.

21. Machine selon la revendication 17 ou 20, *caractérisée* en ce que l'axe de pivotement (54,56; 154,156; 254,256; 354,356; 554) de l'unité de moulage (10,12; 110,111,112) est disposé sur l'extrémité de celle-ci qui est du côté opposé à celui du moule de soufflage (10a,10b; 12a,12b; 110a,110b; 111a,111b; 112a,112b).

22. Machine selon l'une des revendications 2 ou 3, *caractérisée* en ce qu'elle comporte des moyens moteurs (372; 672) pour commander les mouvements de chaque unité de moulage entre la position d'enlèvement et la position de réception.

23. Machine selon l'une des revendications 2 ou 3, *caractérisée* en ce qu'elle comporte des moyens moteurs (72) disposés à poste fixe pour commander les mouvements de chaque unité de moulage entre la position d'enlèvement et la position de réception, ces moyens moteurs pouvant être accouplés tour à tour à chacune des unités de moulage (10,12) prévues pour pouvoir se déplacer entre ces deux positions.

24. Machine selon la revendication 1, *caractérisée* en ce que le système d'extrusion comportant au moins une tête d'extrusion (44; 144) sert à confectionner une ébauche de moulage à paroi multicouche.

25. Machine selon la revendication 1, *caractérisée* en ce que les mouvements des unités de moulage entre les postes (Z,A,C,D) ainsi qu'entre la position d'enlèvement et la position de réception s'effectuent dans un plan sensiblement horizontal.

26. Machine selon la revendication 1, *caractérisée* en ce que les mouvements entre les postes (Z,A,C,D) s'effectuent suivant des trajets sensiblement rectilignes.
